(19) Europäisches Patentamt
European Patent Office
Office européen des brevets

(11) **EP 4 102 067 B1**

(12) **EUROPÄISCHE PATENTSCHRIFT**

(45) Veröffentlichungstag und Bekanntmachung des Hinweises auf die Patenterteilung:
**13.12.2023  Patentblatt 2023/50**

(21) Anmeldenummer: **21179001.9**

(22) Anmeldetag: **11.06.2021**

(51) Internationale Patentklassifikation (IPC):
***F03D 17/00*** *(2016.01)*

(52) Gemeinsame Patentklassifikation (CPC):
**F03D 17/00;** F05B 2270/327; Y02E 10/72

(54) **VERFAHREN ZUM ERFASSEN EINER ROTORDREHZAHL EINER WINDENERGIEANLAGE**

METHOD FOR DETERMINING A ROTOR SPEED OF A WIND TURBINE

PROCÉDÉ DE DÉTERMINATION D'UNE VITESSE DE ROTATION DE ROTOR D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.12.2022  Patentblatt 2022/50**

(73) Patentinhaber: **Wobben Properties GmbH**
**26607 Aurich (DE)**

(72) Erfinder: **Eden, Georg**
**Westerholt (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**DE-B4-102007 026 995    US-A1- 2014 020 444**

**Beschreibung**

Die vorliegende Erfindung betrifft ein Verfahren zum Erfassen einer Rotordrehzahl einer Windenergieanlage, insbesondere einer getriebelosen Windenergieanlage. Die vorliegende Erfindung betrifft weiterhin ein Verfahren zum Steuern einer Windenergieanlage, das das Verfahren zum Erfassen einer Rotordrehzahl einsetzt. Die vorliegende Erfindung betrifft auch eine entsprechende Windenergieanlage, insbesondere eine getriebelose Windenergieanlage, die wenigstens eines der erfindungsgemäßen Verfahren einsetzt.

Moderne Windenergieanlagen sind üblicherweise Drehzahlvariabel ausgebildet. Sie weisen also einen aerodynamischen Rotor auf, der mit einer veränderlichen Rotordrehzahl betreibbar ist. Im Teillastbetrieb, wenn die Windgeschwindigkeit unter Nennwindgeschwindigkeit ist, werden Windenergieanlagen möglichst in einem aerodynamischen optimalen Betriebspunkt betrieben, der sich meist durch eine optimale Schnelllaufzahl auszeichnet. Die Schnelllaufzahl ist dabei der Quotient der Geschwindigkeit der Blattspitzen des aerodynamischen Rotors zur Windgeschwindigkeit. Die Schnelllaufzahl hängt also von der Windgeschwindigkeit und der Rotordrehzahl ab.

Um daher den optimalen Betriebspunkt zu finden, wird eine Windenergieanlage häufig in Abhängigkeit von der erfassten Rotordrehzahl eingestellt. Insbesondere ist es üblich, eine Leistungs-Drehzahlkennlinie, oder alternativ eine Drehmoment-Drehzahlkennlinie zur Steuerung zu hinterlegen. Über diese Kennlinie wird in Abhängigkeit von der erfassten Drehzahl die Leistung bzw. das Drehmoment, also das Generatormoment eingestellt.

Eine gute Erfassung der Rotordrehzahl kann daher wichtig sein. Bei getriebebehafteten Windenergieanlagen wird die langsame Drehzahl des aerodynamischen Rotors in eine schnelle Drehzahl des Generators umgesetzt. Es können dann Standardgeneratoren verwendet werden, die Nenndrehzahlen im Bereich von 1500 - 3000 Umdrehungen pro Minute, also 25 - 50 Umdrehungen pro Sekunde aufweisen. Bei solchen Windenergieanlagen kann die Drehzahl an der schnellen Seite des Getriebes, also am Generator erfasst werden. Dazu kann beispielsweise der Generator selbst einen Messsensor wie bspw. einen Inkrementalgeber aufweisen.

Ein solches System ist in dem deutschen Patent DE 10 2007 026 995 B4 beschrieben. Dort wird ein entsprechender Inkrementalgeber an der schnellen Welle verwendet und zusätzlich ist eine rechnerbasierte Verbesserung zum Ausgleichen von Ungenauigkeiten vorgesehen.

Bei einer getriebelosen Windenergieanlage wird aber unmittelbar die langsame Rotordrehzahl des aerodynamischen Rotors erfasst. Bei modernen Windenergieanlagen liegt diese Drehzahl etwa im Bereich von 5 - 25 Umdrehungen pro Minute. Zur Erfassung kann ein Drehzahlgeber vorgesehen sein, der eine mit dem aerodynamischen Rotor mitlaufende Inkrementscheibe, ein entsprechendes Magnetband oder anderen Inkrementträger aufweist. Dieser Inkrementträger ist dann fest mit dem Rotor verbunden und läuft somit ebenfalls nur sehr langsam um. US 2014/020444 A1 offenbart zum Beispiel eine Windenergieanlage mit bzw. ohne Getriebe und ein Verfahren zur Überwachung einer Drehzahl.

Ungenauigkeiten der Inkremente auf diesem Inkrementträger können dann in der damit erfassten Rotordrehzahl zu Schwankungen führen. Solche Schwankungen können sich auch aus nicht optimal befestigten Inkrementträgern ergeben. So kann die Inkrementscheibe beispielsweise minimal schräg oder außerzentrisch angeordnet sein, so dass sie nicht ganz rund dreht. Bei der Verwendung eines Magnetbandes kann es vorkommen, dass dieses beim Anordnen ungleichmäßig gedehnt wird. Auch beim Zusammenkommen der beiden Enden eines solchen Magnetbandes, wenn dieses um eine zylindrische Aufnahme gelegt wird, können Unregelmäßigkeiten im Abstand der Inkremente auftreten.

All dies sind Probleme, die bei einer unmittelbaren Drehzahlerfassung am langsam drehenden Rotor der Windenergieanlage auftreten. Besonders können solche Probleme daher nicht durch eine Messung über mehrere Umdrehungen gelöst werden, wie dies bei der Messung an der schnellen Welle im Falle einer getriebebehafteten Windenergieanlage möglich sein kann.

Es kommt hinzu, dass nicht von einer konstanten Drehzahl über eine Umdrehung des Inkrementträgers ausgegangen werden kann, wenn dieser direkt mit dem Rotor der Windenergieanlage gekoppelt ist, wenn dieser sich also genauso langsam wie der aerodynamische Rotor der Windenergieanlage dreht. Eine aktuelle Drehzahl ist daher zu jedem Inkrement des Inkrementträgers zu bestimmen, zumindest zu wenigen Inkrementen des Inkrementträgers. Damit muss also im Grunde für jedes Inkrement eine Drehzahl aus der Zeit ermittelt werden können, in der sich der Inkrementträger jeweils um ein Inkrement weiterdreht.

Der vorliegenden Erfindung liegt somit die Aufgabe zugrunde, wenigstens eins der vorgenannten Probleme zu adressieren. Insbesondere soll eine Lösung geschaffen werden, das Erfassen einer Rotordrehzahl einer Windenergieanlage zu verbessern, bei der die Messung mit Hilfe eines Inkrementträgers erfolgt, der mit gleicher Drehzahl mit dem aerodynamischen Rotor der Windenergieanlage mit dreht, wobei insbesondere Variationen durch ungenau angeordnete Inkrementträger ausgeglichen werden sollen. Zumindest soll zu bisher bekannten Lösungen eine alternative vorgeschlagen werden.

Erfindungsgemäß wird ein Verfahren nach Anspruch 1 vorgeschlagen. Das Verfahren betrifft somit das Erfassen einer Rotordrehzahl einer Windenergieanlage wobei die Windenergieanlage einen aerodynamischen Rotor umfasst, der mit einer variablen Rotordrehzahl betreibbar ist. Außerdem umfasst die Windenergieanlage eine Drehzahlmessvorrichtung zum Erfassen der Rotordrehzahl. Die Drehzahlmessvorrichtung weist einen Inkrementträger mit auf einem Umfang verteilten Inkrementen auf, wobei der Inkrementträger mit dem Rotor mechanisch so gekoppelt ist, dass eine Umdrehung des Inkrementträgers einer Umdrehung des Rotors entspricht. Insbesondere ist der Inkrementträger also nicht an einer schnellen Welle angeordnet. Diese Drehzahlmessvorrichtung ist dabei besonders für eine getriebelose Windenergieanlage vorgesehen, wobei sie natürlich auch an der langsamen Welle einer getriebebehafteten Windenergieanlage angeordnet werden könnte.

Die Drehzahlmessvorrichtung weist außerdem einen Messsensor zum Erfassen einer Drehzahl des Inkrementträgers und damit einer Rotordrehzahl der Windenergieanlage auf.

Der Messsensor ist dabei so ausgebildet, dass er Zeiten als Inkrementzeiten für jedes Inkrement erfasst, in denen sich der Inkrementträger jeweils um ein Inkrement weiterdreht. Die Zeit die also vergeht, bis sich der Inkrementträger um ein Inkrement weitergedreht hat, wird als Inkrementzeit bezeichnet. Jedem Inkrement kann dann eine eigene Inkrementzeit zugeordnet werden. Im Grunde ist die Inkrementzeit somit diejenige Zeit, die der Inkrementträger benötigt, um sich um den Abstand zweier benachbarter Inkremente weiter zu drehen, wobei ein solcher Abstand zweier Inkremente nicht den Abstand zwischen diesen beschreibt, sondern beispielsweise zwischen zwei linken Flanken zweier Inkremente, oder zwei rechten Flanken der Inkremente.

Im Idealfall weist der Inkrementträger eine bestimmte Anzahl an Inkrementen auf, die gleichmäßig über den Umfang verteilt sind und somit jeweils gleichgroße Abstände aufweisen. Sind beispielsweise 100 Inkremente vorgesehen, ist der Abstand zweier benachbarter Inkremente ein Hundertstel des Umfangs. In der Praxis ist dann aber der Abstand und die resultierende Inkrementzeit jeweils einem Inkrement zugeordnet.

Ferner sind für eine korrigierte Messung mehrere Schritte bei Drehung des Rotors vorgesehen:

Schritt a): Für jedes Inkrement Bestimmen jeweils einer Differenzzeit als Differenz einer aktuell gemessenen Inkrementzeit und einer Mittelwertzeit, wobei die Mittelwertzeit ein arithmetischer Mittelwert ist, über alle in einer oder mehreren vollständigen Umdrehungen des Inkrementträgers für jedes Inkrement aufgenommenen Inkrementzeiten.

Schritt b): Bestimmen jeweils eines Inkrementkorrekturwertes für jedes Inkrement jeweils in Abhängigkeit von der in Schritt a) gebildeten Differenzzeit des betreffenden Inkrements.

Somit wird besonders für eine Umdrehung des Inkrementträgers und damit für eine Umdrehung des Rotors eine Inkrementzeit für jedes Inkrement aufgenommen. Somit werden für alle Inkremente Inkrementzeiten über diese eine vollständige Umdrehung aufgenommen und davon ein arithmetischer Mittelwert gebildet. Dieser arithmetische Mittelwert ist somit die Mittelwertzeit. Hat der Inkrementträger also beispielsweise 100 Inkremente, werden 100 Inkrementzeiten aufgenommen, nämlich jeweils eine pro Inkrement, und über diese 100 Inkrementzeiten wird der arithmetische Mittelwert gebildet und das Ergebnis ist die Mittelwertzeit.

Die Mittelwertzeit ist also die Zeit, in der sich der Inkrementträger im Mittel um ein Inkrement weiterdreht.

Für jedes Inkrement wird eine Differenzzeit zu dieser Mittelwertzeit bestimmt. Die Differenzzeit gibt also an, um wie viel die Inkrementzeit des jeweiligen Inkrementes über oder unter der Mittelwertzeit liegt.

Es kommt beispielsweise in Betracht, dass hierfür der Rotor der Windenergieanlage, insbesondere angetrieben durch den Wind, mit einer möglichst konstanten Rotordrehzahl dreht. Dann kann für eine Umdrehung die Mittelwertzeit bestimmt werden. Im Anschluss kann dann für jedes Inkrement eine Differenzzeit bestimmt werden.

In Abhängigkeit von der in Schritt a) bestimmten Differenzzeit wird dann jeweils ein Inkrementkorrekturwert bestimmt, auch für jedes Inkrement einzeln. Das kann auch unmittelbar jeweils nach der Bestimmung der Differenzzeit erfolgen. Der Inkrementkorrekturwert kann im einfachsten Fall der Differenzzeit entsprechen. Es kommt aber in Betracht, den Inkrementkorrekturwert mit der Zeit, also nach weiteren Umdrehungen, noch zu verbessern.

Es ist auch zu beachten, dass die Differenzzeit von der Rotordrehzahl abhängt. Je höher die Rotordrehzahl ist, umso kürzer ist auch die Inkrementzeit und somit ist auch die Differenzzeit umso geringer. Um das zu berücksichtigen kann aus der Differenzzeit und der aktuellen Rotordrehzahl ein Inkrementkorrekturwert bestimmt werden, der auf eine Bezugsdrehzahl bezogen ist. Beispielsweise könnte, um es anschaulich zu erläutern, eine Rotordrehzahl von 10 Umdrehungen pro Minute als Bezugsdrehzahl zugrunde gelegt werden. Wird eine Differenzzeit bei 5 Umdrehungen pro Minute aufgenommen, entspräche der Inkrementkorrekturwert bezogen auf die Bezugsdrehzahl von 10 Umdrehungen pro Minute dann der halben Differenzzeit, die für die beispielhaft genannte Rotordrehzahl von 5 Umdrehungen pro Minute bestimmt wurde.

Zur Bestimmung einer korrigierten Rotordrehzahl wird dann für jedes Inkrement eine korrigierte Inkrementzeit durch Korrigieren der jeweils aktuellen Inkrementzeit in Abhängigkeit von dem Inkrementkorrekturwert bestimmt. Dabei wird die aktuelle Drehzahl berücksichtigt. Ist also der Inkrementkorrekturwert auf eine Bezugsdrehzahl bezogen, so kann dies für die aktuelle Rotordrehzahl entsprechend wieder herausgerechnet werden.

Schließlich wird dann eine korrigierte Rotordrehzahl als aktuelle Rotordrehzahl aus der korrigierten Inkrementzeit bestimmt. Auch das erfolgt für jedes Inkrement, nämlich für das jeweils aktuelle Inkrement, für das also in dem Moment die Inkrementzeit durch den Messsensor erfasst wird.

Hier wurde besonders erkannt, dass für solche langsam drehenden Inkrementträger systematische Schwankungen von einem Inkrement zum nächsten auftreten können. Ist der Inkrementträger als Inkrementscheibe ausgebildet, kann eine leicht schräge Anordnung dazu führen, dass die Inkrementzeiten um die Mittelwertzeit etwa sinusförmig schwanken. Bei Verwendung eines Magnetbandes als Inkrementträger kann dieses gedehnt sein. Auch in diesem Fall wäre weniger mit sprunghaften Änderungen zu rechnen, allenfalls an der Verbindungsstelle und stattdessen wäre ein gleichmäßiges Schwanken der Inkrementzeiten um die Mittelwertzeit ebenfalls zu rechnen. Dies wird durch die vorgeschlagene Lösung herausgerechnet.

Die anschauliche Erklärung, dass in einer ersten Umdrehung, wobei es auch mehrere vollständige Umdrehungen sein können, die Mittelwertzeit bestimmt wird und danach die Differenzzeiten für jedes Inkrement bestimmt werden, kann auch in einer quasi kontinuierlichen Art und Weise ausgeführt werden. So kommt in Betracht, dass nach einer ersten vollständigen Umdrehung, also gerechnet von dem Zeitpunkt an dem das Verfahren gestartet wird, die Mittelwertzeit berechnet werden kann. Für das unmittelbar danach folgende Inkrement kann dann die Differenzzeit und auch der Inkrementkorrekturwert berechnet werden.

Für das nächste Inkrement kann dann bereits eine neue Mittelwertzeit bestimmt werden. Auch sie wird für eine vollständige Umdrehung bestimmt, die gegenüber der vorigen aber nur um ein Inkrement verschoben ist. Der Rotor hat sich also nur um ein Inkrement weitergedreht. Mit anderen Worten, um ein Beispiel mit 100 Inkrementen zu nehmen, kann die erste Umdrehung vom Inkrement 1 bis zum Inkrement 100 reichen, wohingegen die zweite Umdrehung vom Inkrement 2 über das Inkrement 100 hinaus bis zum Inkrement 1 reicht. Auch kann die Mittelwertbildung für diese nächste Umdrehung, die aber nur um ein Inkrement weitergedreht ist als die vorige, auf der vorigen Mittelwertbildung aufsetzen. Dazu kann von der vorigen Mittelwertbildung die erste Inkrementzeit abgezogen und die neue aufaddiert werden, jeweils geteilt durch die Anzahl der Inkremente.

Eine solche quasi kontinuierliche Vorgehensweise hat den Vorteil, dass Drehzahlschwankungen möglichst geringen Einfluss haben. Wird nämlich nach der Mittelwertbildung für die Mittelwertzeit eine weitere Umdrehung aufgenommen, so kann sich die Drehzahl in dieser weiteren Umdrehung bereits stark verändert haben, was die Korrektur verfälschen kann.

Vorzugsweise wird ein gleitender Mittelwert berücksichtigt, der jeweils über eine vollständige Umdrehung aufgenommen und für das Inkrement zur Bestimmung der Differenzzeit und des Inkrementkorrekturwertes verwendet wird zu dem bei der Hälfte der Umdrehung der Messsensor die Inkrementzeit erfasst.

Es kann auch pro Umdrehung ein Mittelwert berechnet werden und für die Berechnung aller Inkrementkorrekturwerte der folgenden Umdrehung verwendet werden. Während dieser folgenden Umdrehung kann bereits der nächste Mittelwert für eine weitere folgende Umdrehung berechnet werden.

Gemäß einem Aspekt wird vorgeschlagen, dass die Schritte a) und b) für eine oder mehrere weitere Umdrehungen wiederholt werden, und bei jeder Wiederholung für jedes Inkrement jeweils eine aktuelle Differenzzeit bestimmt wird und der Inkrementkorrekturwert in Abhängigkeit von der aktuellen Differenzzeit verändert wird. Grundsätzlich ist eine Wiederholung der Schritte und damit ein Verändern, nämlich Verbessern jedes Inkrementkorrekturwertes nicht erforderlich, denn die Differenzzeiten können genau berechnet werden und daraus ein genau passender Inkrementkorrekturwert abgeleitet wird. Das würde allerdings eine konstante Drehzahl voraussetzen. Da die Drehzahl aber über eine vollständige Umdrehung nicht als konstant angenommen werden kann bzw. nicht unbedingt erkennbar ist, wenn ein solcher Zustand doch mal vorgelegen hat, können sich geringe Ungenauigkeiten ergeben.

Die zugrundeliegende Idee ist nämlich, dass bei exakt konstanter Drehzahl die Mittelwertzeit der objektiv richtigen Zeit für das jeweilige Inkrement entspricht. Die davon abhängig ermittelte Differenzzeit ist damit der objektive Fehler, der sich nicht ändert und nur einmal bestimmt zu werden braucht, zumindest für die betreffende Drehzahl. Mit einer Umrechnung mit einem Inkrementkorrekturwert zu einer Bezugsdrehzahl ergebe sich ein genauer und insbesondere richtiger Inkrementkorrekturwert. Eine Änderung zum Zwecke der Verbesserung wäre nicht nötig.

Dadurch, dass die Drehzahl aber nicht als konstant angenommen werden kann, gibt die Mittelwertzeit nicht unbedingt die exakt korrekte Inkrementzeit für jedes Inkrement jeweils wieder, sondern kann davon etwas abweichen. Entsprechend ergibt sich eine leicht fehlerhafte Differenzzeit und ein leicht fehlerhafter Inkrementkorrekturwert.

Durch die Wiederholung kann dieses Problem verringert und im Idealfall vollständig gelöst werden. Hier liegt der Gedanke zugrunde, dass die Drehzahl statistisch schwankt, also jeweils für ein Inkrement mal zu hoch und mal zu niedrig liegt. Durch die Wiederholung der Bestimmung der Differenzzeit kann somit der Inkrementkorrekturwert nach und nach verändert, nämlich verbessert werden.

Insbesondere wird vorgeschlagen, dass zum Bestimmen des Inkrementkorrekturwertes die aktuelle Differenzzeit über eine Filterfunktion eingeht. Die Filterfunktion ist besonders vorgesehen, wenn die Schritte a) und b) sehr häufig wiederholt werden, insbesondere, wenn sie ständig wiederholt werden solange die Windenergieanlage arbeitet, und/oder eine große Serie von Differenzzeiten für jedes Inkrement vorliegt. Diese Serie von Differenzzeiten wird somit über die Filterfunktion geleitet.

Die Differenzzeit kann indirekt über eine Filterfunktion eingehen, wenn sie bspw. zuvor auf eine Drehzahl normiert wurde. Es wird dann also nicht die Differenzzeit, sondern die normierte Differenzzeit über die Filterfunktion geführt.

Außerdem oder alternative wird vorgeschlagen, dass das Verändern des Inkrementkorrekturwertes so erfolgt, dass sich der Inkrementkorrekturwert mit jeder Wiederholung einem Endwert annähert. Das kann dadurch erreicht werden, dass die Filterfunktion Tiefpasscharakter hat. Es kann auch dadurch erfolgen, dass Änderungen mit abnehmenden Gewichtungen vorgenommen werden.

Gemäß einem Aspekt wird vorgeschlagen, dass zum Bestimmen oder Verändern des Inkrementkorrekturwertes die Filterfunktion verwendet wird und bei jeder Wiederholung der Schritte a) und b) für jedes Inkrement jeweils eine aktuelle Differenzzeit bestimmt wird, als Filtereingangsgröße die aktuelle Differenzzeit oder eine zur aktuellen Differenzzeit proportionale Größe in die Filterfunktion eingegeben wird und eine resultierende Ausgangsgröße der Filterfunktion als jeweiliger Inkrementkorrekturwert verwendet wird, oder zumindest zur Bestimmung des Inkrementkorrekturwertes verwendet wird.

Die jeweilige Differenzzeit wird also in die Filterfunktion eingegeben und es ergibt sich der Inkrementkorrekturwert. Besonders wird, auch zum Zwecke der Veranschaulichung von einem Verzögerungsglied erster Ordnung ausgegangen. Erhält dieses als Eingangsgröße immer etwa gleichgroße Differenzzeiten, die somit als Eingangssprung am Eingang dieser Filterfunktion verstanden werden können, so nähert sich der Ausgang der Filterfunktion nach und nach dem Wert des Eingangssprungs an. Gleichzeitig können durch die Filterfunktion Schwankungen der Differenzzeiten, deren Grund oben schon erläutert wurde, durch diese Filterfunktion ausgeglichen werden.

Es muss allerdings nicht unbedingt unmittelbar die Differenzzeit den Eingang der Filterfunktion bilden, sondern es kommt auch eine dazu proportionale Größe in Betracht. Besonders kann vorgesehen sein, die Differenzzeit zunächst mit einem Anpassungsfaktor zu multiplizieren, der umgekehrt proportional zur aktuellen Rotordrehzahl ist. Die so entstehende zur aktuellen Differenzzeit proportionale Größe kann dann als Differenzzeit verstanden werden, die um die Abhängigkeit von der Rotordrehzahl bereinigt ist, bzw. sie kann verstanden werden als eine auf eine Bezugsdrehzahl, also auf eine Referenzrotordrehzahl normierte Größe.

Alternativ kann eine solche Anpassung auch am Ausgang der Filterfunktion durchgeführt werden. Da aber die Rotordrehzahl schwankt und somit der Ausgleichsfaktor sich zeitlich ständig ändern kann, der Ausgleichsfaktor also eine zeitabhängige Größe ist, kann es zu nichtlinearen Effekten führen, sodass eine Anpassung der Differenzzeiten vor der Eingabe in die Filterfunktion vorzuziehen ist.

Eine ergänzende Anpassung am Ausgang der Filterfunktion kommt dennoch in Betracht, sodass die Ausgangsgröße der Filterfunktion nicht identisch mit dem Inkrementkorrekturwert sein muss. Beispielsweise kommt noch eine Anpassung über einen konstanten Faktor in Betracht, was auch von der konkreten Implementierung in einem Prozessrechner abhängen kann.

Gemäß einem Aspekt wird vorgeschlagen, dass jeweils bei jeder Wiederholung der Schritte a) und b) für jedes Inkrement jeweils eine aktuelle Differenzzeit bestimmt wird, und der Inkrementkorrekturwert IK(k+1) im Wesentlichen oder exakt mit Hilfe der folgenden Formel bestimmbar ist,

$$IK(k+1) = IK(k) + (IK(k) - F(n) * \Delta t) * G(k),$$

wobei IK(k) einen vorherigen Inkrementkorrekturwert bezeichnet, mit k als fortlaufende Zahl, $\Delta t$ die aktuelle Differenzzeit bezeichnet, n die aktuelle Rotordrehzahl bezeichnet, F(n) einen von der Rotordrehzahl abhängigen Anpassungsfaktor bezeichnet und G(k) einen zeitabhängigen Gewichtungsfaktor, wobei vorzugsweise der Anpassungsfaktors F(n) definiert ist als F(n) =n0/n mit n0 als Bezugsdrehzahl, und/oder G(k) Werte im Bereich von 0 bis 1 aufweist, insbesondere Wert im Bereich von 0,001 bis 0,2, und/oder G(k) mit zunehmenden Wiederholungen und damit mit der Zeit abnimmt. Der zeitabhängige Gewichtungsfaktor G(k) kann somit auch als von der Anzahl der bereits durchgeführten Wiederholungen oder von der aktuellen bzw. betrachteten Wiederholung abhängiger Gewichtungsfaktor bezeichnet werden.

Durch diese Formel ist auf einfache Art und Weise eine Berechnung des Inkrementkorrekturwertes möglich. Als Anfangswert kann ein Inkrementkorrekturwert unmittelbar aus der Differenzzeit $\Delta t$ multipliziert mit dem Anpassungsfaktor berechnet werden. Ein solcher Inkrementkorrekturwert ist bereits ein guter Wert und kann dann in Wiederholungen durch die Formel weiter angepasst werden. Die Formel stellt im Übrigen eine Umsetzung dar, bei der der Inkrementkorrekturwert mit Hilfe einer Filterfunktion bestimmt wird, die als Verzögerungsglied erster Ordnung ausgebildet ist.

Zur Formel ist zu erläutern, dass das Produkt aus dem Anpassungsfaktor F(n) und der Differenzzeit $\Delta t$ idealerweise, wenn bei der Umdrehung also die Drehzahl konstant war, dem objektiv richtigen Inkrementkorrekturwert entspricht. Sollte der vorherige Inkrementkorrekturwert IK(k) auch bereits der objektiv richtige sein, ist in der Formel die Differenz IK(k)-F(n*$\Delta t$) = 0. Der existierende, also vorherige Inkrementkorrekturwert IK(k) wird dann also gar nicht verändert.

Ergeben sich aber leichte Schwankungen, weil die Drehzahl nicht konstant ist, so ergibt sich bei der genannten Differenz lediglich eine geringe Abweichung. Diese wird mit der Gewichtungsfunktion G(k) multipliziert, zum Beispiel mit dem Wert 0,1. In diesem Beispiel wird also nur ein Wert von 10 % dieser geringen Abweichung auf den Inkrementkorrekturwert aufaddiert, wodurch sich diese nur geringfügig ändert.

Wäre der Gewichtungsfaktor G(k) 1, würde die Korrektur dazu führen, dass der neue Inkrementkorrekturwert genau dem entspricht, was durch die aktuelle Differenzzeit berechnet würde. Der Inkrementkorrekturwert würde also auf den Wert springen und bei der nächsten Wiederholung würde sich ein anderer Wert ergeben und auf den würde der Inkrementkorrekturwert dann springen. Es ist aber stattdessen gewünscht, dass sich der Inkrementkorrekturwert langsam einem Endwert nähert. Daher wird der Gewichtungsfaktor kleiner gewählt. Das Beispiel mit dem Gewichtungsfaktor von 0,1 entspricht einem Verzögerungsglied erster Ordnung bei dem eine Sprungfunktion im zehnten Schritt etwa 63 % des Eingangssprungwertes erreicht.

Da davon ausgegangen wird, dass es einen objektiv korrekten Inkrementkorrekturwert gibt, soll dieser angestrebt werden und daher wird vorgeschlagen den Gewichtungsfaktor G(k) allmählich zu verringern. Dadurch vergrößert sich eine Zeitkonstante des Verzögerungsglieds erster Ordnung und der Inkrementkorrekturwert strebt immer mehr einem festen, idealen Wert zu.

Der Inkrementkorrekturwert ist also mit der vorgenannten Formel im Wesentlichen bestimmbar. Es muss nicht exakt diese Formel verwendet werden, sie gibt aber die Art und Weise wieder, wie der Inkrementkorrekturwert bestimmt werden soll und insbesondere ist an ihr auch das dynamische Verhalten ablesbar, mit dem der Inkrementkorrekturwert einem Endwert entgegenstrebt. Aber die Formel könnte auch verändert werden, zum Beispiel könnte statt des Verhaltens eines Verzögerungsglieds erster Ordnung auch ein Verzögerungsglied zweiter Ordnung verwendet werden, vorzugsweise so parametriert dass keine Überschwinger vorhanden sind, um ein Beispiel zu nennen. Aber natürlich kann der Inkrementkorrekturwert auch exakt mit der genannten Formel bestimmt werden.

Gemäß einem Aspekt wird vorgeschlagen, dass die Filterfunktion zum Bestimmen über Nachführen jedes Inkrementkorrekturwertes wenigstens eine Filterzeitkonstante aufweist und dass die Filterzeitkonstante nach einem Start des Verfahrens mit zunehmender Zeit verändert wird, insbesondere, dass die Filterzeitkonstante mit zunehmender Zeit und/oder mit zunehmender Wiederholung der Schritte a) und b) vergrößert wird. Die Filterfunktion wird dann also immer langsamer sodass der Inkrementkorrekturwert einem Endwert entgegenstrebt. In der oben genannten Formel ist keine Filterzeitkonstante ausdrücklich genannt, die Gewichtungsfunktion G(k) hat aber die Wirkung, dass die Formel eine zeitabhängige Filterzeitkonstante aufweist, wie oben erläutert wurde. Je kleiner nämlich die Gewichtungsfunktion G(t) ist umso größer ist die Filterzeitkonstante.

Gemäß einem Aspekt wird vorgeschlagen, dass die Filterzeitkonstante zum Bestimmen oder Nachführen jedes Inkrementkorrekturwertes in Abhängigkeit von einem Betriebszustand verändert wird, insbesondere in Abhängigkeit von der erfassten Rotordrehzahl. Hier wurde besonders erkannt, dass bei geringen Rotordrehzahlen diese über eine Umdrehung auch stärker variieren kann, damit die Mittelwertzeit entsprechend stark ungenau werden kann und damit auch die Differenzzeit von einer objektiv richtigen Differenzzeit entsprechend stark abweichen kann. Damit wird vorgeschlagen besonders bei geringen Drehzahlen eine Große Filterzeitkonstante zu wählen, damit der Einfluss einer Messung bei geringen Drehzahlen entsprechend geringer ist. Somit wird vorzugsweise vorgeschlagen, dass die Filterzeitkonstante umso größer gewählt wird, je kleiner die Rotordrehzahl ist.

Gemäß einem Aspekt wird vorgeschlagen, dass das Verfahren, insbesondere die Schritte a) und b) und das Wiederholen der Schritte a) und b) mit wiederholtem Bestimmen der Inkrementkorrekturwerte im laufenden Betrieb der Windenergieanlage durchgeführt wird. Das Verfahren eignet sich besonders dazu, solche Inkrementkorrekturwerte auch bei schwankenden Drehzahlen zu bestimmen bzw. unter solchen Umständen nach und nach an einen objektiv richtigen Korrekturwert heranzuführen. Damit kann dieses Verfahren angewendet werden, ohne dass dafür gezielt eine Drehzahl gesteuert werden muss, oder die Windenergieanlage anderweitig darauf eingestellt werden muss. Im Grunde kann eine neu installierte Windenergieanlage einfach installiert und betrieben werden und die Inkrementkorrekturwerte werden dabei nach und nach erstellt.

Gemäß einem Aspekt wird vorgeschlagen, dass jeder Inkrementkorrekturwert einer Bezugsdrehzahl zugeordnet ist, und eine Umrechnungsvorschrift, insbesondere ein Proportionalitätsfaktor vorgesehen ist, um den Inkrementkorrekturwert der Bezugsdrehzahl zum Korrigieren einer Inkrementzeit bei anderen Drehzahl als der Bezugsdrehzahl zu verwenden. Beispielsweise werden alle Inkrementkorrekturwerte auf eine Bezugsdrehzahl von 10 Umdrehungen pro Minute bezogen. Wird dann eine Korrektur bei einer Drehzahl von 5 Umdrehungen pro Minute benötigt, kann der hinterlegte Inkrementkorrekturwert entsprechend einfach mit dem Faktor 2 multipliziert werden.

Gemäß einem Aspekt wird vorgeschlagen, dass der Inkrementkorrekturwert in einer Korrekturtabelle abgelegt werden, wobei für jedes Inkrement jeweils mehrere Inkrementkorrekturwerte abgespeichert werden, insbesondere für unterschiedliche Werte der Rotordrehzahl. Grundsätzlich kommt in Betracht, alternativ zu dem Hinterlegen der Inkrementkorrekturwerte zu einer Bezugsdrehzahl Inkrementkorrekturwerte für verschiedene Rotordrehzahlen zu hinterlegen.

Hier liegt besonders die Überlegung zu Grunde, dass sich für die Inkrementkorrekturwerte für sehr geringe Rotordrehzahlen einerseits und sehr hohe Drehzahlen andererseits nichtlineare Effekte ergeben, sodass Inkrementkorrekturwerte für mehrere Rotordrehzahlen hinterlegt werden, so dass im Grunde mehrere Bezugsdrehzahlen vorgesehen sein können.

Gemäß einem Aspekt wird vorgeschlagen, dass die Inkrementkorrekturwerte aller Inkremente, zumindest für eine Bezugsdrehzahl, um einen für alle Inkrementkorrekturwerte gleichen Ausgleichswert verändert werden, insbesondere so, dass der Ausgleichswert zu jedem Inkrementkorrekturwert aufaddiert wird und außerdem oder alternativ der Ausgleichswert so gewählt wird, dass die Summe aller um den Ausgleichswert veränderten Inkrementkorrekturwerte 0 wird.

Hier wurde erkannt, dass sich durch Rundungen ein systematischer Fehler ergeben kann, wodurch sämtliche Inkrementkorrekturwerte einen etwas größeren Wert den jeweils objektiv richtigen Wert anstreben. Um dem entgegenzuwirken ist eine Änderung durch den für alle Inkrementkorrekturwerte gleichen Ausgleichswert vorgesehen.

Das vorgeschlagene Verfahren behebt systematische Fehler der Drehzahlmessvorrichtung, die Auftreten können und insbesondere als sinusförmiger Verlauf der Differenzzeiten um die Mittelwertzeit auftreten können. Das wird durch die Inkrementkorrekturwerte ausgeglichen. Die Inkrementkorrekturwerte variieren somit zwischen positiven und negativen Werten, je nachdem, zu welchem Inkrement sie gehören. Der erkannte systematische Fehler, der durch den Ausgleichswert behoben wird, führt zu einer minimalen Anhebung oder Absenkung aller Inkrementkorrekturwerte, und zwar hinsichtlich ihrer absoluten Werte, also nicht hinsichtlich ihrer Beträge.

Ein solches Anheben führt also dazu, dass die negativen Inkrementkorrekturwerte dem Betrage nach kleiner und die positiven Inkrementkorrekturwerte dem Betrage nach größer werden. Die Summe aller Inkrementkorrekturwerte, wenn sie also vorzeichenbehaftet aufsummiert werden, ist dann größer als 0. Der Ausgleichswert ist so vorgesehen, dass diese Summe 0 ist. Die Inkrementkorrekturwerte sind also nach Anwendung dieses Ausgleichswertes gleichmäßig um den Wert der Mittelwertzeit angeordnet, um es anschaulich zu erläutern.

Gemäß einem Aspekt wird vorgeschlagen, dass die Inkrementkorrekturwerte in einer dynamischen Tabelle abgelegt werden, die im laufendem Betrieb aktualisiert werden kann und dann meist auch aktualisiert wird, insbesondere so, dass die Inkrementkorrekturwerte der Tabelle jeweils über eine Filterfunktion der aktuellen Differenzzeit bzw. einer dazu proportionalen Größe nachgeführt werden und außerdem oder alternativ die Tabelle für jeden Inkrementkorrekturwert zumindest einer Bezugsdrehzahl um einen bzw. den Ausgleichswert verändert wird, und die korrigierte Drehzahl so bestimmt wird, dass inkrementweise zu jedem Inkrement aus der aktuell gemessenen Inkrementzeit und dem zugehörigen Inkrementkorrekturwert aus der dynamischen Tabelle eine korrigierte Inkrementzeit bestimmt wird, und daraus die korrigierte Drehzahl bestimmt und als aktuelle Drehzahl der Windenergieanlage verwendet wird.

Insbesondere kann somit das Anwenden eines Inkrementkorrekturwertes von der aktuellen Drehzahl abhängen. Diese wird laufend bestimmt und liegt somit in guter Näherung vor. Abhängig von dieser aktuellen Drehzahl werden dann also die Inkrementkorrekturwerte aus der dynamischen Tabelle ausgelesen und auf die aktuelle Drehzahl angepasst. Damit kann dann wiederrum die Drehzahl als korrigierte Drehzahl erfasst werden, die als aktuelle Drehzahl verwendet wird.

Erfindungsgemäß wird auch ein Verfahren zum Steuern einer Windenergieanlage vorgeschlagen, wobei die Windenergieanlage in Abhängigkeit von einer Rotordrehzahl gesteuert wird und die Rotordrehzahl mit einem Verfahren zum Erfassen einer Rotordrehzahl gemäß einem der vorstehend beschriebenen Aspekte erfasst wird. Damit kann die Steuerung der Windenergieanlage verbessert werden. Besonders eine von der Drehzahl abhängige Steuerung der Windenergieanlage kann verbessert werden. Dazu gehört besonders die Steuerung der Windenergieanlage unter Verwendung einer Drehzahl-Leistungs-Kennlinie oder einer Drehzahl-Drehmoment-Kennlinie, bei der unter Verwendung einer solchen Kennlinie die Leistung bzw. das Drehmoment in Abhängigkeit von der Drehzahl eingestellt wird.

Erfindungsgemäß wird auch eine Windenergieanlage vorgeschlagen, insbesondere eine getriebelose Windenergieanlage. Die vorgeschlagene Windenergieanlage ist vorbereitet zum Ausführen eines Verfahrens zum Erfassen einer Rotordrehzahl der Windenergieanlage, und die Windenergieanlage umfasst einen aerodynamischen Rotor, der mit einer variablen Rotordrehzahl betreibbar ist, und eine Drehzahlmessvorrichtung zum Erfassen der Rotordrehzahl, mit einem Inkrementträger mit auf einem Umfang verteilten Inkrementen, wobei der Inkrementträger mit dem Rotor mechanisch so gekoppelt ist, dass eine Umdrehung des Inkrementträgers einer Umdrehung des Rotors entspricht, und einem Messsensor zum Erfassen einer Drehzahl des Inkrementträgers, wobei der Messsensor Zeiten als Inkrementzeiten für jedes Inkrement erfasst, in denen sich der Inkrementträger jeweils um ein Inkrement weiterdreht, und eine Steuereinrichtung zum Steuern der Windenergieanlage und zum Ausführen des Verfahrens zum Erfassen einer Rotordrehzahl, wobei für eine korrigierte Messung in dem Verfahren zum Erfassen einer Rotordrehzahl folgende Schritte bei Drehung des Rotors vorgesehen sind:

a) für jedes Inkrement Bestimmen jeweils einer Differenzzeit als Differenz einer aktuell gemessenen Inkrementzeit und einer Mittelwertzeit, wobei die Mittelwertzeit ein arithmetischer Mittelwert ist über alle in einer oder mehreren vollständigen Umdrehungen des Inkrementträgers für jedes Inkrement aufgenommenen Inkrementzeiten, und

b) Bestimmen jeweils eines Inkrementkorrekturwertes für jedes Inkrement jeweils in Abhängigkeit von der in Schritt a) gebildeten Differenzzeit des betreffenden Inkrementes, und wobei zur Bestimmung einer korrigierten Rotordrehzahl in dem Verfahren zum Erfassen einer Rotordrehzahl für jeweils ein Inkrement eine korrigierte Inkrementzeit durch Korrigieren der jeweils aktuellen Inkrementzeit in Abhängigkeit von dem Inkrementkorrekturwert bestimmt wird, und eine korrigierte Rotordrehzahl als aktuelle Rotordrehzahl aus der korrigierten Inkrementzeit bestimmt wird.

Besonders ist die Windenergieanlage dadurch zum Ausführen des Verfahrens vorbereitet, dass das betreffende Verfahren in der Windenergieanlage implementiert ist. Insbesondere ist es in der Steuereinrichtung zum Steuern der Windenergieanlage implementiert. Die Steuereinrichtung kann außerdem die Windenergieanlage steuern, indem sie insbesondere eine Steuerung der Drehzahl und/oder eine Steuerung der Leistung und/oder des Drehmoments der Windenergieanlage bzw. des Generators in Abhängigkeit von der erfassten Rotordrehzahl durchführt.

Die Steuereinrichtung kann dabei auch örtlich verteilte Elemente aufweisen, zum Beispiel eine Erfassungseinrichtung in der Gondel der Windenergieanlage zum Erfassen der Rotordrehzahl, insbesondere der korrigierten Rotordrehzahl, und eine Einspeiseeinrichtung im Turmfuß des Turmes der Windenergieanlage zum Einspeisen elektrischer Leistung in das elektrische Versorgungsnetz. Die Erfassungseinrichtung kann mit einer Steuerungseinrichtung zum Steuern der Rotordrehzahl, Leistung und/oder Drehmoment kombiniert oder vereint sein und ebenfalls in der Gondel angeordnet sein.

Gemäß einem Aspekt wird vorgeschlagen, dass die Windenergieanlage, insbesondere die Steuereinrichtung, dazu vorbereitet ist, ein Verfahren gemäß einer der vorstehend beschriebenen Aspekte auszuführen. Sie ist also dazu vorbereitet, sowohl ein Verfahren zum Erfassen einer Rotordrehzahl gemäß den entsprechenden Aspekten auszuführen, als auch ein Verfahren zum Steuern der Windenergieanlage gemäß den entsprechenden Aspekten auszuführen.

Nachfolgend wird die Erfindung beispielhaft anhand von Ausführungsformen unter Bezugnahme auf die begleitenden Figuren näher erläutert.

Figur 1 zeigt eine Windenergieanlage in einer perspektivischen Darstellung.

Figur 2 zeigt eine Teilansicht einer getriebelosen Windenergieanlage.

Figuren 3A und 3B zeigen schematisch zwei unterschiedliche Drehzahlmessvorrichtungen.

Figur 4 veranschaulicht in einem Diagramm der Erfindung zugrundeliegende Probleme beim Aufnehmen von Inkrementzeiten.

Figur 5 zeigt ein Ablaufdiagramm zum Erfassen von Inkrementkorrekturwerten.

Figur 6 zeigt ein Ablaufdiagramm zum Bestimmen einer korrigierten Rotordrehzahl unter Verwendung von Inkrementkorrekturwerten, wie sie gemäß Figur 4 erfasst wurden.

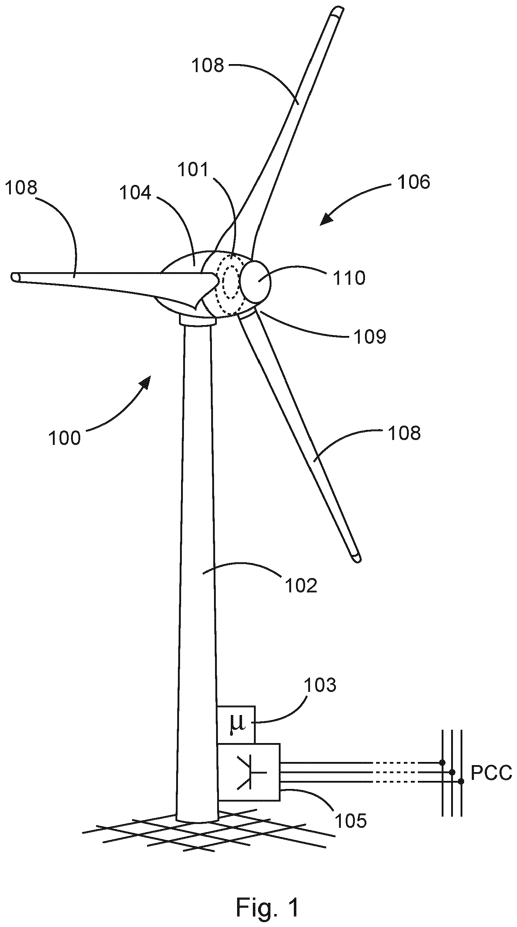

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen, die auch synonym als Steuereinrichtung bezeichnet werden kann. Die Anlagensteuerung 103 kann auch Vorgabewerte von extern, insbesondere von einem zentralen Parkrechner erhalten.

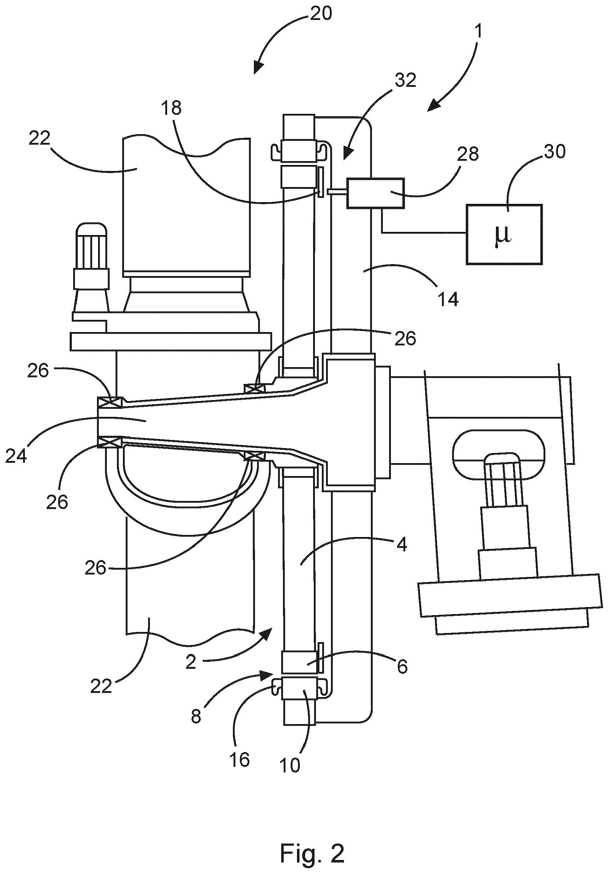

Figur 2 zeigt schematisch in einer Seitenansicht einen Generator 1 mit einem Rotor 2 mit einem Rotorträger 4 und einem Rotorpolbereich 6, der sich durch einen Luftspalt 8 getrennt in dem Stator 10 des Generators 1 drehen kann. Der Stator 10 wird von einem Statorträger 14 gehalten, der, wie auch der Rotorträger 4, vorzugsweise Sternförmig ausgebildet ist. An dem Stator 10 ist zudem beidseitig ein Wickelkopf 16 angedeutet.

Zur Veranschaulichung ist an dem Rotorträger 4 im Bereich des Rotorpolbereichs 6 eine Inkrementscheibe 18 angedeutet, die somit einen Inkrementträger bildet. Die Inkrementscheibe 18 läuft somit an dem Rotorträger 4 vollständig um. Sie weist viele Inkremente auf, die in der Figur 2 aber nicht dargestellt sind, die aber im Wesentlichen gleichmäßig in Umfangsrichtung über die Inkrementscheibe 18 verteilt sind. Die Inkrementscheibe 18 ist fest an dem Rotorträger 4 befestigt und dreht sich somit zusammen mit ihm, wenn sich der Rotor 2 des Generators mit dem aerodynamischen Rotor 20 dreht. Der aerodynamische Rotor 20 weist drei Rotorblätter 22 auf, von denen 2 in der Figur 2 angedeutet sind.

Die in Figur 2 gezeigte Windenergieanlage ist somit eine getriebelose Windenergieanlage, bei der sich der aerodynamische Rotor 20 zusammen mit dem Rotor 2 des Generators 1 und damit zusammen mit der Inkrementscheibe 18 um einen Achszapfen 24 dreht. Dazu sind der aerodynamische Rotor 20 und der Rotor2 des Generators 1 über die beiden Drehlager 26 drehbar auf diesem Achszapfen 24 gelagert. Zur Drehzahlerfassung dreht sich somit die Inkrementscheibe 18 an einem Messsensor 28 vorbei. Dabei bewegen sich nach und nach die auf der Inkrementscheibe gleichförmig angeordneten Inkremente an dem Messsensor 28 vorbei, der zur Erfassung der Drehzahl Zeiten als Inkrementzeiten für jedes Inkrement erfasst, in denen sich die Inkrementscheibe jeweils um ein Inkrement weiterdreht. Er erfasst also die Zeit, die von einem bis zum nächsten Inkrement vergeht. Zur Auswertung ist zudem eine Auswerteeinrichtung 30 angedeutet, die auch Teil einer Steuereinrichtung bzw. der Anlagensteuerung 103 gemäß Figur 1 sein kann.

Die Inkrementscheibe 18 bildet zusammen mit dem Messsensor 28 eine Drehzahlmessvorrichtung 32, zumindest bilden sie zusammen einen Teil einer solchen Drehzahlmessvorrichtung, zu der auch die Auswerteeinrichtung 30 gerechnet werden kann.

Ein Inkrementträger kann gemäß einer anderen Ausgestaltung auch im Bereich eines Schleifringkörpers angeordnet sein, z.B. im Bereich des Achszapfens 24 in der Nähe des in der Figur 2 links dargestellten Lagers 26. Der Inkrementträger kann dann kleiner sein, dreht sich dennoch synchron mit dem aerodynamischen Rotor. Auch dabei können die genannten Probleme auftreten, dass der Träger nicht rund läuft und dadurch die beschriebenen Abweichungen auftreten können.

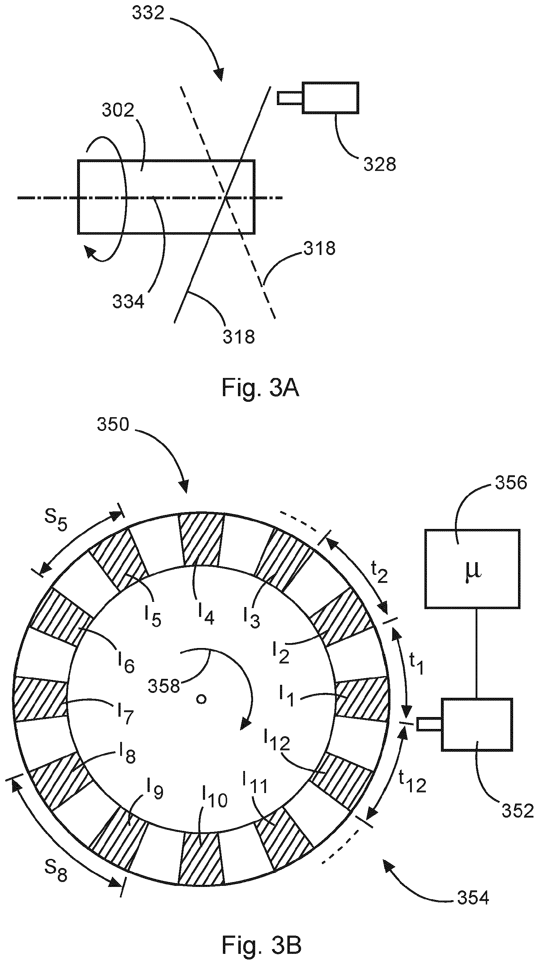

Figur 3A zeigt eine Drehzahlmessvorrichtung 332 mit einer Inkrementscheibe 318 und einem Messsensor 328. Die Inkrememtalscheibe 318 ist an einem nur symbolisch dargestellten Rotor 302 eines Generators einer getriebelosen Windenergieanlage angeordnet. Der Rotor 302 dreht sich dabei um eine Drehachse 334.

Zum Zwecke der Veranschaulichung ist die Inkrementscheibe 318 mit einer übertriebenen Schiefstellung gegenüber der Drehachse 334 dargestellt. Dreht sich der Rotor 302 um eine halbe Umdrehung um seine Drehachse 334, ändert sich dadurch somit die Stellung der Inkrementscheibe 318 relativ zu dem Messsensor 328. Um das zu veranschaulichen sind diese beiden Stellungen der Inkrementscheibe 318 dargestellt. In der einen Stellung ist die Inkrementscheibe 318 als durchgezogene Linie gezeigt, die dem Messsensor 328 sehr nahekommt, wohingegen in der zweiten Stellung die Inkrementscheibe 318 als gestrichelte Linie angedeutet ist und dabei einen großen Abstand zum Messsensor 328 aufweist. Daraus können Abweichungen für die jeweils erfassten Inkrementzeiten entstehen.

Es kommt aber auch eine exzentrische Bewegung der Welle in Betracht. Bei magnetischer Abtastung können die erfassten Magnetfelder auch mit dem Abstand variieren und dadurch Abweichungen hervorrufen.

Figur 3B zeigt eine Inkrementscheibe 350, die zusammen mit einem Messsensor 352 eine insgesamt in Figur 3B dargestellte Messvorrichtung 354 bilden. Zumindest bilden sie einen Teil der Drehzahlmessvorrichtung 354, die auch die angedeutete Auswerteeinrichtung 356 umfassen kann.

Auf der Inkrementscheibe 350 sind beispielhaft 12 Inkremente $I_1$, bis $I_{12}$ angedeutet. Solche Inkremente können zur optischen Erkennung ausgebildet sein, zum Beispiel schwarze Bereiche auf einer ansonsten weißen Inkrementscheibe oder als reflektierende Bereiche oder als lichtdurchlässige Bereiche. Sie können aber auch als magnetisierte Bereiche oder als magnetisch wirksame Bereiche ausgebildet sein, um entsprechend statt optisch magnetisch ausgewertet zu werden. Beispielsweise kann die Inkrementscheibe 350 dazu ein entsprechendes Magnetband mit magnetischen Inkrementen aufweisen, wobei ein solches Magnetband auf einer Umfangsfläche der Inkrementscheibe oder einem anderen Trägerzylinder angeordnet sein kann.

Besonders im Falle der Anordnung eines Magnetbandes können geringfügige Variationen in den Abständen der einzelnen Inkremente auftreten. Der Abstand zweier Inkremente kann beispielsweise so definiert werden, dass jeweils der Abstand einer Kante eines Inkrements zur entsprechenden Kante des nächsten Inkrements als Abstand der beiden Inkremente verwendet werden kann. Es kommen aber auch andere Definitionen in Betracht, wie beispielsweise einen solchen Abstand jeweils auf die Mitte eines Inkrements zu beziehen. Wobei natürlich jeweils der gleiche Radius zu Grunde gelegt wird.

Beispielhaft sind in Figur 3B zwei Abstände $S_5$ und $S_8$ als Abstände des 5. bzw. 8. Inkrements eingezeichnet. Hier ist der Abstand eines Inkrements jeweils als Abstand des Inkrements zu seinem nachfolgenden Inkrement definiert. Durch eine ungleichmäßige Dehnung eines Magnetbandes beim Anordnen eines entsprechenden zylindrischen Trägers kann es dann dazu führen, dass die beispielhaft genannten Inkrementabstände $S_5$ und $S_8$ unterschiedlich groß sind. Zur Drehzahlerfassung dreht sich die Inkrementscheibe 350 beispielsweise mit der angedeuteten Drehrichtung 358. Dadurch wird ein Inkrement nach dem anderen an dem Messsensor 352 vorbeigedreht. Der Messsensor 352 misst dann die Zeit, die dabei vergeht, bis sich die Inkrementscheibe um ein Inkrement weitergedreht hat.

Beispielsweise wird als erste Inkrementzeit $t_1$ des ersten Inkrements $I_1$, die Zeit aufgenommen, die vergeht, bis das zweite Inkrement, die Position des ersten Inkrements erreicht hat. Hier wird von der in Drehrichtung vorderen Kante des ersten Inkrementes $I_1$ zur vorderen Kante des zweiten Inkrements $I_2$ die Zeit aufgenommen. Diese Zeit hängt also von der Drehgeschwindigkeit also Drehzahl der Inkrementscheibe 350 ab, und dem Abstand zwischen diesen beiden Kanten.

In diesem Sinne werden auch nach und nach zu jedem Inkrement jeweils eine Inkrementzeit aufgenommen, als nächstes also die zweite Inkrementzeit $t_2$ für das zweite Inkrement $I_2$.

Ist die Drehzahl der Inkrementscheibe 350 konstant, und die jeweiligen Abstände, von denen der fünfte und achte Abstand $S_5$ bzw. $S_8$ exemplarisch eingezeichnet sind, gleichgroß, sollten alle Inkrementzeiten $t_1$ bis $t_{12}$ identisch sein. Liegen aber unterschiedlich große Abstände vor, ergeben sich unterschiedliche Inkrementzeiten und daraus würde, ohne die vorgeschlagene Korrektur, die Drehzahlmessvorrichtung unterschiedliche Drehzahlen für die jeweiligen Inkremente berechnen.

Ein gleiches Problem ergäbe sich, wenn die Abstände zwischen den Inkrementen zwar gleich sind, die Inkrementscheibe sich aber nicht gleichförmig dreht, wie es in Figur 3A angedeutet ist. Der Messsensor nimmt nämlich dann kürzere Zeiten wahr, wenn die Inkrementscheibe ganz nah am Sensor ist bzw. am weitesten von ihm weg ist, wohingegen die Zeiten im Übergangsbereich, während sich die Scheibe bei der Drehung von dem Messsensor entfernt bzw. auf ihn zuläuft, länger werden.

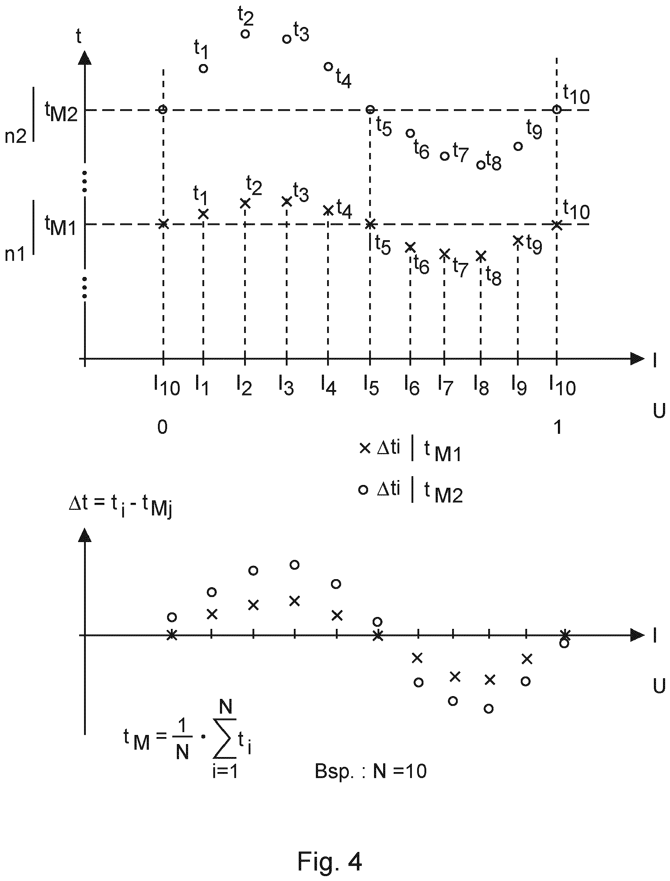

Zur Veranschaulichung zeigt Figur 4 ein Diagramm mit zwei Messreihen von Inkrementzeiten für unterschiedliche Drehzahlen. Auch das Diagramm der Figur 4 ist veranschaulichend. Insbesondere haben Inkrementscheiben oder andere Inkrementträger üblicherweise eine sehr viel höhere Anzahl von Inkrementen, zum Beispiel 200 Inkremente für eine Umdrehung. Den Beispielen der Figur 4 liegt ein Inkrementträger mit 10 Inkrementen zugrunde, nämlich die Inkremente $I_1$, bis $I_{10}$. Der Einfachheit halber wurde hier die gleiche Bezeichnung wie in Figur 3B gewählt, aber es liegt natürlich offensichtlich nicht dieselbe Inkrementscheibe 350 der Figur 3B zugrunde, da in Figur 4 nur zehn Inkremente vorgesehen sind. Die Anzahl vorhandener Inkremente ist in Figur 4 auch als N=10 genannt.

Figur 4 veranschaulicht im oberen Diagramm somit die Aufnahme von Inkrementzeiten $t_1$ bis $t_{10}$ für zwei unterschiedliche Drehzahlen $n_1$ und $n_2$ für eine vollständige Umdrehung U. Hinsichtlich der Umdrehung reicht das Diagramm somit von 0 bis 1, was somit einer Umdrehung um 10 Inkremente entspricht, da der zugrunde gelegte Inkrementträger genau 10 Inkremente aufweist.

Figur 4 zeigt nun die Messung der Inkrementzeiten $t_1$ bis $t_{10}$ für die Drehzahl $n_1$ und für die Drehzahl $n_2$. Für die Anzahl N=10 in dem gezeigten Beispiel ist die Drehzahl $n_1$ größer als die Drehzahl $n_2$. Entsprechend ergeben sich bei der größeren Drehzahl $n_1$ kürzere Messzeiten. Für beide Drehzahlen $n_1$ bis $n_2$ sind somit Inkrementzeiten $t_1$ bis $t_{10}$ aufgenommen worden und dem jeweiligen Inkrement $I_1$ bis $I_{10}$ zugeordnet. Aus diesen zehn Inkrementzeiten lässt sich jeweils eine Mittelwertzeit $t_{M1}$ bzw. $t_{M2}$ für die jeweilige Drehzahl $n_1$ bzw. $n_2$ ermitteln. Im Grunde ist diese Mittelwertzeit die Zeit eines vollständigen Umlaufs des Inkrementträgers, geteilt durch die Anzahl Inkremente. Die Variante, die Mittelwertzeit $t_M$ aus der Summe der einzelnen Inkrementzeiten zu berechnen, ist durch die entsprechende Formel unten in der Figur 4 angegeben. In dieser allgemeinen Formel ist der Index für die betreffende Drehzahl weggelassen worden. Die Formel lautet:

$$t_M = \frac{1}{N} * \sum_{i=1}^{N} t_i$$

Jedenfalls kann die entsprechende Mittelwertzeit $t_{M1}$ und $t_{M2}$ in dem Diagramm dargestellt werden und sie sind jeweils durch eine waagerechte gestrichelte Linie dargestellt. Es ist erkennbar, dass die Inkrementzeiten $t_1$ bis $t_{10}$ um diese Mittelwertzeit $t_{M1}$ bzw. $t_{M2}$ schwanken. Bei größeren Inkrementzeiten, somit also auch bei einer größeren Mittelwertzeit, sind auch die absoluten Schwankungen größer. Die relativen Schwankungen sollten allerdings gleich sein.

Um nun diese Schwankungen herauszurechnen, kann zu jeder Inkrementzeit eine Differenzzeit $\Delta t$ berechnet werden, nämlich mit der Formel: $\Delta t = t_i - t_{Mj}$. Mit Hilfe dieser Differenzzeit könnte somit jede falsche gemessene Inkrementzeit korrigiert werden. Allerdings schwankt auch die Differenzzeit mit der Drehzahl, was dem unteren Diagramm der Figur 4 gut zu entnehmen ist.

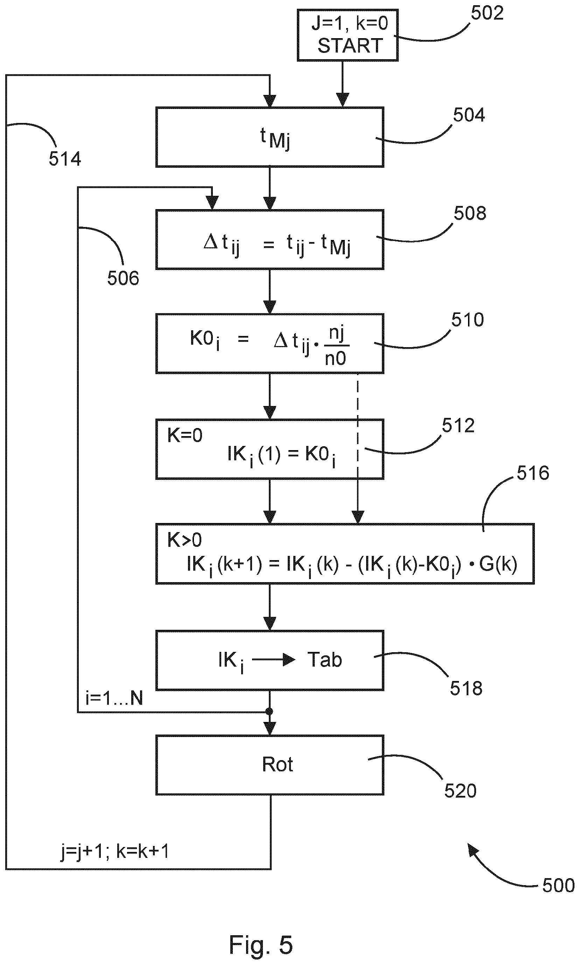

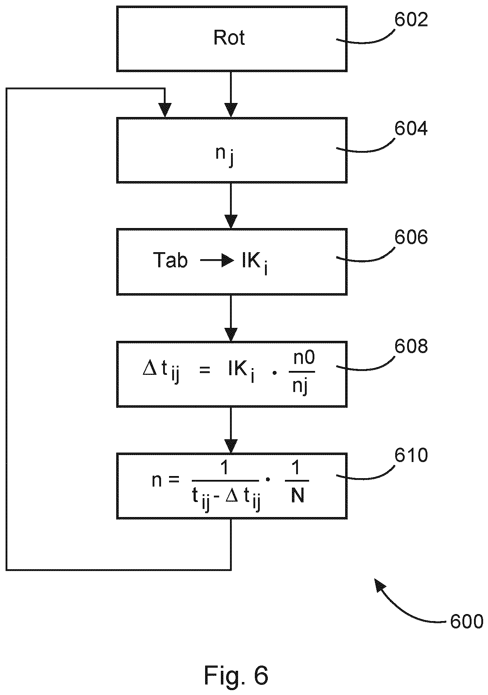

Es ist daher wünschenswert, die jeweilige Differenzzeit eines Inkrements auf eine Bezugsdrehzahl oder Referenzdrehzahl zu normieren. Dann kann es ausreichen, zu jedem Inkrement nur eine Differenzzeit zu hinterlegen bzw. dazu nur einen Inkrementkorrekturwert für jedes Inkrement zu hinterlegen. Um dann die Drehzahlkorrektur vorzunehmen, kann ein solcher auf eine Referenzdrehzahl normierter Inkrementkorrekturwert bzw. normierte Inkrementzeit ausgehend von der ungefähren Drehzahl in eine dieser ungefähren Drehzahl zugeordnete konkrete Differenzzeit des Inkrements umgerechnet werden. Das wird nachfolgend anhand von den Figuren 5 und 6 erläutert.

Figur 5 zeigt ein Ablaufdiagramm zum Erfassen, Verbessern und Abspeichern von Inkrementkorrekturwerten $IK_i$. Der Index $i$ ordnet den Inkrementkorrekturwert jeweils einem entsprechenden Inkrement $I_i$ zu. Ebenfalls werden unterschiedliche Drehzahlen $n_j$ berücksichtigt, wobei $n_j$ die jeweilige Drehzahl bezeichnet, die insbesondere für eine vollständige Umdrehung vorgesehen ist. Die Drehzahl $n_j$ kann insoweit auch als mittlere Drehzahl der betreffenden Umdrehung verstanden werden.

Der Index $_j$ soll aber nicht im Zusammenhang mit der Größe der Drehzahl stehen. Ein grö-ßeres j muss also keine größere Drehzahl sein. Unterschiedliche Werte für j können auch dieselbe Drehzahl bezeichnen, obwohl das wiederrum sehr unwahrscheinlich ist, da die Drehzahlen sich kontinuierlich verändern können und somit zumindest zu erwarten ist, dass die Drehzahlen sich minimal unterscheiden. Vorsorglich wird darauf hingewiesen, dass es aber keine Voraussetzung ist, dass sich die Drehzahlen unterscheiden. Sollten also für den gesamten in Figur 5 dargestellten Ablauf die Drehzahlen immer gleich sein, ändert sich dadurch aber der geschilderte Ablauf nicht. Insbesondere wird für den Ablauf in Figur 5 davon ausgegangen, dass jeweils die Drehzahlen verwendet werden, die grade vorliegen. Das in Figur 5 beschriebene Verfahren eignet sich somit zur Anwendung im laufenden Betrieb, ohne dass der laufende Betrieb spezielle Drehzahlen bereitstellen müsste.

Jedenfalls beginnt der Ablauf 500 mit dem Startblock 502. In dem Startblock werden die Indizes j auf 1 und k auf 0 als Startwert gesetzt und im Laufe des Verfahrens nach und nach hochgesetzt. Im Grunde sind diese Indizes j und k als diskrete Laufvariable zu verstehen und in dem Ablauf werden sie tatsächlich immer zugleich erhöht, sodass j immer um 1 größer ist als k. Beide Variablen haben aber prozesslogisch eine etwas andere Bedeutung, sodass zwischen j und k unterschieden wird. Im Grunde stehen j und k jeweils für die Umdrehung, die grade durchgeführt und betrachtet wird.

Mit diesen Startwerten erfolgt dann in dem Mittelwertblock 504 die Berechnung der Mittelwertzeit $t_{Mj}$, die für die nachfolgende innere Schleife 506 benötigt wird. In der folgenden inneren Schleife 506 erfolgt dann im Differenzzeitblock 508 die Berechnung der Differenzzeit $\Delta t_{ij}$. Die Differenzzeit $\Delta t_{ij}$ berechnet sich also aus der Differenz der Inkrementzeit $t_{ij}$ und der Mittelwertzeit tnn; mit der Formel $\Delta t_{ij} = t_{ij} - t_{Mj}$. Dazu war es natürlich auch erforderlich was in dem Diagramm nicht extra erwähnt wurde, die Inkrementzeiten $t_{ij}$ bzw. die jeweils aktuelle Inkrementzeit aufzunehmen.

In dem Normierungsblock 510 wird die Differenzzeit $\Delta t_{ij}$, die der aktuellen Drehzahl n; zugeordnet ist, auf eine Referenzdrehzahl $n_0$ normiert. Das Ergebnis ist ein ungefilterter Korrekturwert K0$_i$. Er berechnet sich nach der Formel

$$K0_i = \Delta t_{ij} * \frac{n_j}{n_0}.$$

Der ungefilterte Korrekturwert K0$_i$ berechnet sich also unmittelbar und eindeutig nach dieser Formel, die auch in dem Normierungsblock 510 angegeben ist. Bei gleicher Differenzzeit und gleicher Drehzahl ergibt sich also auch immer derselbe Wert. Dieser ungefilterte Korrekturwert kann einerseits als Anfangswert für jeden Inkrementkorrekturwert IK$_i$ verwendet werden, wie das in dem Anfangsblock 512 durchgeführt wird. In dem Anfangsblock 512 wird also für jedes Inkrement ein Anfangswert für den Inkrementkorrekturwert IK$_i$ gesetzt. Das ist also der Wert für k = 0. Dieser Anfangsblock 512 wird somit nur dann ausgeführt, wenn k = 0 ist. In dem Anfangsblock 512 wird somit der Wert für IKi (k + 1) für den Wert k = 0 bestimmt.

In allen weiteren Durchläufen der äußeren Schleife 514, wenn k also größer 0 ist, nämlich 1, 2 oder noch größer, wird der Filterblock 516 ausgeführt.

In dem Filterblock 516 wird also erstmals beim zweiten Durchlauf der äußeren Schleife 514 der Inkrementkor-rekturwert IK$_i$ verändert, nämlich weiter angepasst. Dazu liegt dann eine neue Differenzzeit vor, die nämlich bei dem erneuten Durchlauf in dem Differenzzeitblock 508 berechnet wurde. Aus ihr ergibt sich auch in dem Normierungsblock 510 ein neuer ungefilterter Korrekturwert K0$_i$. Basierend auf diesem ungefilterten Korrekturwert K0$_i$ wird nun der Inkre-mentkorrekturwert aus dem letzten Durchlauf der äußeren Schleife, einschließlich also aus dem ersten Durchlauf, in dem er in dem Anfangsblock 512 erstmalig berechnet wurde, in dem Filterblock 516 angepasst.

Entsprechend geht diese Filterberechnung von den vorherigen Inkrementkorrekturwert IK$_i$(k) aus. Zur Verän-derung wird ebenfalls dieser vorherige Inkrementkorrekturwert IK$_i$(k) mit dem ungefilterten Inkrementkorrekturwert K0$_i$ ins Verhältnis gesetzt, es wird also eine Differenz gebildet. Diese Differenz ist im Idealfall 0, sodass der vorherige Inkrementkorrekturwert IK$_i$ (k) gar nicht verändert wird. Ergeben sich aber kleine Veränderungen, ist die besagte Differenz nicht 0 und diese wird mit einem veränderlichen Gewichtungsfaktor G(k) multipliziert. Der veränderliche Gewichtungsfaktor G(k) sollte deutlich kleiner als 1 sein, aber größer als 0. Mit der Zeit, also mit zunehmenden k sollte der veränderliche Gewichtungsfaktor G(k) weiter verringert werden, nämlich in Richtung 0. Eine Möglichkeit, den veränderlichen Gewichtungsfaktor G(k) zu definieren wäre über die Formel $G(k) = \frac{G_0}{k}$.

$G_0$ stellt dann den Anfangswert dar, denn bei der ersten Berechnung in dem Filterblock 516 ist k = 1. Dieser Anfangswert kann beispielsweise 10 % betragen.

Eine andere Variante wäre die Formel $G(k) = \frac{G_0}{Na+k}$. In diesem Fall könnte der Anfangswert $G_0$ den Wert 1 und die Variable Na, die einen Anfangsnennwert bildet, den Wert 10 aufweisen, um ein weiteres Beispiel zu nennen.

Jedenfalls wird vorgeschlagen, die Differenz aus den vorigen Inkrementkorrekturwert IK$_i$(k) und dem ungefil-terten Korrekturwert K0$_i$ mit dem veränderlichen Gewichtungsfaktor G(k) zu multiplizieren. Der resultierende geringe Wert wird dann von dem vorherigen Inkrementkorrekturwert IK$_i$(k) abgezogen und das Ergebnis ist der neue, bzw. aktuelle Inkrementkorrekturwert IK$_i$(k+1). Er berechnet sich also nach der Formel:

$$IK_i(k + 1) = IK_i(k) - (IK_i(k) - K0_i) * G(k)$$

Der so bestimmte Inkrementkorrekturwert IK$_i$ kann dann in einer Tabelle abgespeichert werden. Das veranschaulicht der Speicherblock 518. Damit endet die innere Schleife 506 und die ist für jedes Inkrement 1 bis N zu wiederholen. Es werden also die Blöcke 508, 510 und 512, oder 516, wiederholt und es ergibt sich dann ein Inkrementkorrekturwert IK$_i$ für das jeweils aktuelle Inkrement und der wird gemäß Speicherblock 518 abgespeichert.

Diese genannten fünf Blöcke bilden somit die innere Schleife. Diese innere Schleife dient aber besonders auch der Veranschaulichung, dass die dargestellten Berechnungen für jedes Inkrement durchzuführen sein.

Nach einer vollständigen Berechnung von Inkrementkorrekturwerten für jedes Inkrement wird die Drehung des Rotors fortgesetzt, was durch den Rotationsblock 520 veranschaulicht sein soll. Aber natürlich wird die Drehung des Rotors für die Berechnung der inneren Schleife nicht angehalten und für die Wiederholung fortgesetzt, sondern es findet eine kontinuierliche Drehung statt.

Üblicherweise arbeiten Prozessrechner mittlerweile so schnell, dass sie während einer vollständigen Umdrehung sämtliche Berechnungen der inneren Schleife 506 ausführen können. Die äußere Schleife 514 wird somit für eine weitere Umdrehung durchgeführt, die sich an die vorherige Umdrehung anschließen kann. Es können auch unausgewertete Umdrehungen zwischendurch durchgeführt werden, sollte es dafür einen Anlass geben.

Jedenfalls wird durch das Wiederholen der äußeren Schleife 514 ein neuer Satz Inkrementkorrekturwerte IKi berechnet und gemäß dem Speicherblock 518 ebenfalls abgespeichert. Bei diesem Abspeichern, können die alten, also vorherigen Werte der Inkrementkorrekturwerte überschrieben werden. Durch die Berechnung im Filterblock 516 wird somit jeder Inkrementkorrekturwert also jeweils ein Inkrementkorrekturwert für jedes Inkrement nach und nach angepasst. Diese nach und nach aufgenommenen Inkrementkorrekturwerte jedes Inkrementes laufen dabei nach und nach gegen einen Endwert. Das wird besonders dadurch erreicht, dass der veränderliche Gewichtungsfaktor G(k) nach und nach gegen 0 verringert wird.

Das Ergebnis des Ablaufs 500 der Figur 5 ist somit eine Tabelle mit Inkrementkorrekturwerten, nämlich jeweils einer pro Inkrement, mit deren Hilfe eine korrigierte, also sehr genaue Drehzahl für jedes Inkrement gebildet werden kann. Das ist in Figur 6 erläutert.

Figur 6 zeigt somit ein Ablaufdiagramm 600 zur korrekten Berechnung der aktuellen Drehzahl n. Das Ablaufdiagramm 600 beginnt mit dem Startblock 602 der nur andeutet, dass der Rotor der Windenergieanlage gedreht wird. Tatsächlich bedarf es aber keines ausdrücklichen Startes dieses Ablaufs zur Drehzahlerfassung, denn die Drehzahl wird möglichst ununterbrochen während des Betriebs der Windenergieanlage erfasst.

In dem Drehzahlblock 604 wird die aktuelle Drehzahl n; festgesetzt. Sie kann sich aber auch einfach aus dem Ergebnis dieses Ablaufs ergeben.

Es schließt sich der Ausleseblock 606 an, der zu dem aktuellen Inkrement den Inkrementkorrekturwert IK$_i$ ausliest.

In dem Differenzzeitblock 608 kann dann die Differenzzeit $\Delta t_{ij}$ berechnet werden. Der im Ausleseblock 606 ausgelesene Inkrementkorrekturwert IKi ist auf eine Referenzdrehzahl n$_0$ normiert bzw. referenziert. Das ist im Grunde das Ergebnis des Normierungsblocks 510 der Figur 5. Diese Normierung wird im Grunde im Differenzzeitblock 608 wieder zurückgerechnet. Dazu wird die in dem Drehzahlblock 604 festgesetzte Drehzahl n; verwendet. Die Differenzzeit $\Delta t_{ij}$ der aktuellen Drehzahl und des aktuellen Inkrementes berechnet sich somit durch die Formel:

$$\Delta t_{ij} = IK_i * \frac{n_0}{n_j}$$

Mit der so berechneten Differenzzeit $\Delta t_{ij}$ kann die aktuell erfasste Inkrementzeit des aktuellen Inkrementes somit korrigiert werden. Entsprechend ist auch die aktuelle Inkrementzeit $t_{ij}$ erfasst worden. Von ihr ist zur Korrektur die Differenzzeit $\Delta t_{ij}$ abzuziehen. Der Bruchteil der Umdrehung, der einem Inkrement entspricht und somit durch 1/N berechnet werden kann, geteilt durch die korrigierte Inkrementzeit ergibt somit die Drehzahl n. Die Drehzahl n lässt sich somit durch folgende Formel berechnen:

$$n = \frac{1}{t_{ij} - \Delta t_{ij}} * \frac{1}{N}$$

Dies ist in dem Drehzahlberechnungsblock 610 veranschaulicht. Dieser Ablauf kann somit kontinuierlich für jedes Inkrement wiederholt werden. Damit kann auch für jedes Inkrement eine aktuelle Drehzahl ermittelt werden. Auch dies ist besonders wichtig für die Drehzahlerfassung einer getriebelosen Windenergieanlage bzw. die Drehzahlerfassung an dem aerodynamischen Rotor, also im Falle einer Getriebeanlage an der langsamen Welle. Hier ist es für die Steuerung der Windenergieanlage wichtig, ständig eine aktuelle Drehzahl zur Verfügung zu haben und damit eine solche zu berechnen, bevor eine vollständige Umdrehung durchgeführt wurde. Eine solche vollständige Umdrehung des aerodynamischen Rotors und damit des Inkrementträgers würde nämlich mehrere Sekunden bis hin zu 10 Sekunden dauern.

Ein aktueller Drehzahlwert bei hoher Güte ist aber viel häufiger notwendig. Zum einen ist er für eine kontinuierliche Drehzahlregelung und damit auch für eine Leistungs- bzw. Drehmomentregelung erforderlich. Zum anderen gibt es aber auch Ereignisse, die eine Drehzahlregelung erforderlich machen und teilweise nur wenige Sekunden dauern. Besonders ist hier das Bereitstellen einer sogenannten Momentanreserve durch eine Windenergieanlage zu nennen. Hierbei wird für wenige Sekunden, insbesondere im Bereich von 2 bis 20 Sekunden, insbesondere 5 bis 10 Sekunden zusätzliche Leistung in das elektrische Versorgungsnetz eingespeist, die aus der kinetischen Energie des drehenden aerodynamischen Rotors verwendet wird. Der aerodynamische Rotor verzögert sich dadurch erheblich und genau das muss innerhalb dieser wenigen Sekunden sehr genau gesteuert werden. Daher ist es wichtig, eine aktuelle Drehzahl bei jedem Inkrement zu Erfassen.

Bei einem Inkrementträger mit 200 Inkrementen können somit 10 bis 20 Drehzahlwerte pro Sekunde akkurat erfasst werden. Bei höheren Drehzahlen können es noch mehr Werte sein.

**Patentansprüche**

1. Verfahren zum Erfassen einer Rotordrehzahl einer Windenergieanlage (100), und die Windenergieanlage umfasst

    - einen aerodynamischen Rotor (106), der mit einer variablen Rotordrehzahl betreibbar ist, und
    - eine Drehzahlmessvorrichtung zum Erfassen der Rotordrehzahl, mit

        - einem Inkrementträger (18) mit auf einem Umfang verteilten Inkrementen, wobei der Inkrementträger (18) mit dem Rotor (106) mechanisch so gekoppelt ist, dass eine Umdrehung des Inkrementträgers (18) einer Umdrehung des Rotors (106) entspricht, und
        - einem Messsensor (28) zum Erfassen einer Drehzahl des Inkrementträgers (18), wobei der Messsensor Zeiten als Inkrementzeiten für jedes Inkrement erfasst, in denen sich der Inkrementträger jeweils um ein Inkrement weiterdreht,

    wobei für eine korrigierte Messung folgende Schritte bei Drehung des Rotors (106) vorgesehen sind:

        a) für jedes Inkrement Bestimmen jeweils einer Differenzzeit als Differenz einer aktuell gemessenen Inkrementzeit und einer Mittelwertzeit, wobei
        die Mittelwertzeit ein arithmetischer Mittelwert ist über alle in einer oder mehreren vollständigen Umdrehungen des Inkrementträgers für jedes Inkrement aufgenommenen Inkrementzeiten, und
        b) Bestimmen jeweils eines Inkrementkorrekturwertes für jedes Inkrement jeweils in Abhängigkeit von der in Schritt a) gebildeten Differenzzeit des betreffenden Inkrementes, und wobei

    zur Bestimmung einer korrigierten Rotordrehzahl

        - für jeweils ein Inkrement eine korrigierte Inkrementzeit durch Korrigieren der jeweils aktuellen Inkrementzeit in Abhängigkeit von dem Inkrementkorrekturwert bestimmt wird, und
        - eine korrigierte Rotordrehzahl als aktuelle Rotordrehzahl aus der korrigierten Inkrementzeit bestimmt wird.

2. Verfahren nach Anspruch 1, **dadurch gekennzeichnet, dass**

    - die Schritte a) und b) für eine oder mehrere weitere Umdrehungen wiederholt werden, und
    - bei jeder Wiederholung für jedes Inkrement

        - jeweils eine aktuelle Differenzzeit bestimmt wird, und
        - der Inkrementkorrekturwert in Abhängigkeit von der aktuellen Differenzzeit verändert wird, insbesondere so, dass
        - zum Bestimmen des Inkrementkorrekturwertes die aktuelle Differenzzeit über eine Filterfunktion eingeht, und/oder so, dass
- sich der Inkrementkorrekturwert mit jeder Wiederholung einem Endwert annähert.

3. Verfahren nach Anspruch 1 oder 2, **dadurch gekennzeichnet, dass**

- zum Bestimmen oder Verändern des Inkrementkorrekturwertes eine bzw. die Filterfunktion verwendet wird, und
- bei jeder Wiederholung der Schritte a) und b) für jedes Inkrement

- jeweils eine aktuelle Differenzzeit bestimmt wird,
- als Filtereingangsgröße die aktuelle Differenzzeit oder eine zur aktuellen Differenzzeit proportionale Größe in die Filterfunktion eingegeben wird und
- eine resultierende Ausgangsgröße der Filterfunktion als jeweiliger Inkrementkorrekturwert verwendet wird, oder zumindest zur Bestimmung des Inkrementkorrekturwertes verwendet wird.

4. Verfahren nach einem der vorstehenden Ansprüche, **dadurch gekennzeichnet, dass**

- bei jeder Wiederholung der Schritte a) und b) für jedes Inkrement jeweils
- eine aktuelle Differenzzeit bestimmt wird und
- der Inkrementkorrekturwert IK(k+1) im Wesentlichen oder exakt mit Hilfe der folgenden Formel bestimmbar ist,

$$IK(k+1)=IK(k) - (IK(k)-F(n)*\Delta t)*G(k),$$

wobei

IK(k) einen vorherigen Inkrementkorrekturwert bezeichnet, mit
k als fortlaufende Zahl zum Zählen der Wiederholungen,
$\Delta t$ die aktuelle Differenzzeit bezeichnet,
n die aktuelle Rotordrehzahl bezeichnet,
F(n) einen von der Rotordrehzahl abhängigen Anpassungsfaktor bezeichnet und
G(k) einen zeitabhängigen Gewichtungsfaktor,

- wobei vorzugsweise

der Anpassungsfaktors F(n) definiert ist als

F(n) =n0/n mit n0 als Bezugsdrehzahl, und/oder
G(k) Werte im Bereich von 0 bis 1 aufweist, insbesondere Wert im Bereich von 0,001 bis 0,2, und/oder
G(k) mit zunehmenden Wiederholungen und damit mit der Zeit abnimmt.

5. Verfahren nach einem der vorstehenden Ansprüche, **dadurch gekennzeichnet, dass**

- eine bzw. die Filterfunktion zum Bestimmen oder Nachführen jedes Inkrementkorrekturwertes wenigstens eine Filterzeitkonstante aufweist, und dass
- die Filterzeitkonstante nach einem Start des Verfahrens mit zunehmender Zeit verändert wird, insbesondere, dass
- die Filterzeitkonstante mit zunehmender Zeit und/oder zunehmender Wiederholung der Schritte a) und b) vergrößert wird.

6. Verfahren nach einem der vorstehenden Ansprüche, **dadurch gekennzeichnet, dass**

- ein bzw. die Filterzeitkonstante zum Bestimmen oder Nachführen jedes Inkrementkorrekturwertes in Abhängigkeit von einem Betriebszustand verändert wird, insbesondere
- in Abhängigkeit von der erfassten Rotordrehzahl, wobei insbesondere
- die Filterzeitkonstante umso größer gewählt wird, je kleiner die Rotordrehzahl ist.

7. Verfahren nach einem der vorstehenden Ansprüche, **dadurch gekennzeichnet, dass**

- das Verfahren, insbesondere die Schritte a) und b) und das Wiederholen der Schritte a) und b) mit wiederholtem Bestimmen der Inkrementkorrekturwerte, im laufenden Betrieb der Windenergieanlage durchgeführt wird.

8. Verfahren nach einem der vorstehenden Ansprüche, **dadurch gekennzeichnet, dass**

- jeder Inkrementkorrekturwert einer Bezugsdrehzahl zugeordnet ist, und
- eine Umrechnungsvorschrift, insbesondere ein Proportionalitätsfaktor vorgesehen ist, um den Inkrementkorrekturwert der Bezugsdrehzahl zum Korrigieren einer Inkrementzeit bei einer anderen Drehzahl als der Bezugsdrehzahl zu verwenden.

9. Verfahren nach einem der vorstehenden Ansprüche, **dadurch gekennzeichnet, dass**

- die Inkrementkorrekturwerte in einer Korrekturtabelle abgelegt werden, und/oder
- für jedes Inkrement jeweils mehrere Inkrementkorrekturwerte abgespeichert werden, insbesondere für unterschiedliche Werte der Rotordrehzahl.

10. Verfahren nach einem der vorstehenden Ansprüche, **dadurch gekennzeichnet, dass**

- die Inkrementkorrekturwerte aller Inkremente, zumindest für eine Bezugsdrehzahl, um einen für alle Inkrementkorrekturwerte gleichen Ausgleichswert verändert werden, insbesondere so, dass
- der Ausgleichswert zu jedem Inkrementkorrekturwert aufaddiert wird und außerdem oder alternativ
- der Ausgleichswert so gewählt wird, dass die Summe aller um den Ausgleichswert veränderten Inkrementkorrekturwerte null wird.

11. Verfahren nach einem der vorstehenden Ansprüche, **dadurch gekennzeichnet, dass**

- die Inkrementkorrekturwerte in einer dynamischen Tabelle abgelegt werden, die im laufenden Betrieb aktualisiert werden kann, insbesondere so, dass

- die Inkrementkorrekturwerte der Tabelle jeweils über eine Filterfunktion der aktuellen Differenzzeit bzw. einer dazu proportionalen Größe nachgeführt werden und außerdem oder alternativ
- die Tabelle für jeden Inkrementkorrekturwert, zumindest einer Bezugsdrehzahl um einen bzw. den Ausgleichswert verändert wird, und

- die korrigierte Drehzahl so bestimmt wird, dass

- inkrementweise zu jedem Inkrement aus der aktuell gemessenen Inkrementzeit und dem zugehörigen Inkrementkorrekturwert aus der dynamischen Tabelle eine korrigierte Inkrementzeit bestimmt wird, und daraus die korrigierte Drehzahl bestimmt und als aktuelle Drehzahl der Windenergieanlage verwendet wird.

12. Verfahren zu Steuern einer Windenergieanlage (100), wobei

- die Windenergieanlage in Abhängigkeit von einer Rotordrehzahl gesteuert wird, und
- die Rotordrehzahl mit einem Verfahren gemäß einem der vorstehenden Ansprüche erfasst wird.

13. Windenergieanlage (100), insbesondere eine getriebelose Windenergieanlage, vorbereitet zum Ausführen eines

Verfahrens zum Erfassen einer Rotordrehzahl der Windenergieanlage, und die Windenergieanlage umfasst

- einen aerodynamischen Rotor (106), der mit einer variablen Rotordrehzahl betreibbar ist,
- eine Drehzahlmessvorrichtung (32) zum Erfassen der Rotordrehzahl, mit

- einem Inkrementträger (18) mit auf einem Umfang verteilten Inkrementen, wobei der Inkrementträger mit dem Rotor (106) mechanisch so gekoppelt ist, dass eine Umdrehung des Inkrementträgers (18) einer Umdrehung des Rotors entspricht und
- einem Messsensor (28) zum Erfassen einer Drehzahl des Inkrementträgers (18), wobei der Messsensor Zeiten als Inkrementzeiten für jedes Inkrement erfasst, in denen sich der Inkrementträger jeweils um ein Inkrement weiterdreht, und

- eine Steuereinrichtung (103) zum Steuern der Windenergieanlage (100) und zum Ausführen des Verfahrens zum Erfassen einer Rotordrehzahl,

wobei für eine korrigierte Messung in dem Verfahren zum Erfassen einer Rotordrehzahl folgende Schritte bei Drehung des Rotors (106) vorgesehen sind:

a) für jedes Inkrement Bestimmen jeweils einer Differenzzeit als Differenz einer aktuell gemessenen Inkrementzeit und einer Mittelwertzeit, wobei
die Mittelwertzeit ein arithmetischer Mittelwert ist über alle in einer oder mehreren vollständigen Umdrehungen des Inkrementträgers für jedes Inkrement aufgenommenen Inkrementzeiten, und
b) Bestimmen jeweils eines Inkrementkorrekturwertes für jedes Inkrement jeweils in Abhängigkeit von der in Schritt a) gebildeten Differenzzeit des betreffenden Inkrementes, und wobei

zur Bestimmung einer korrigierten Rotordrehzahl in dem Verfahren zum Erfassen einer Rotordrehzahl

- für jeweils ein Inkrement eine korrigierte Inkrementzeit durch Korrigieren der jeweils aktuellen Inkrementzeit in Abhängigkeit von dem Inkrementkorrekturwert bestimmt wird, und
- eine korrigierte Rotordrehzahl als aktuelle Rotordrehzahl aus der korrigierten Inkrementzeit bestimmt wird.

**14.** Windenergieanlage (100) nach Anspruch 13, **dadurch gekennzeichnet, dass**

- die Windenenergieanlage (100), insbesondere die Steuereinrichtung (103) dazu vorbereitet ist, ein Verfahren gemäß einem der Ansprüche 1 bis 12 auszuführen.

**Claims**

**1.** Method for detecting the rotor speed of a wind turbine (100), and the wind turbine includes

an aerodynamic rotor (106) that can be operated at a variable rotor speed, and
a speed measuring device for detecting the rotor speed, with

an increment carrier (18) with increments distributed over a circumference, wherein the increment carrier (18) is mechanically coupled to the rotor (106) in such a way that one revolution of the increment carrier (18) corresponds to one revolution of the rotor (106), and
a measuring sensor (28) for detecting the speed of the increment carrier (18), wherein the measurement sensor records times as increment times for each increment in which the increment carrier rotates one increment at a time,

For a corrected measurement, the following steps are provided when the rotor rotates (106):

a) for each increment determine a difference time as the difference between a currently measured increment time and a mean time, where
the mean time is an arithmetic mean over all increment times recorded in one or more complete revolutions of the increment carrier for each increment, and
b) determine an increment correction value for each increment for each increment depending on the difference time of the increment in question formed in step (a), and
for determining a corrected rotor speed

a corrected increment time is determined for each increment by correcting the current increment time as a function of the increment correction value, and
a corrected rotor speed is determined as the current rotor speed from the corrected increment time.

**2.** Method according to claim 1, **characterized in that**

steps (a) and (b) are repeated for one or more further revolutions, and
at each repetition for each increment

each a current difference time is determined, and
the increment correction value is changed as a function of the current difference time, in particular in such a way that
to determine the increment correction value, the current difference time is entered via a filter function, and/or in such a way that
the increment correction value approaches a final value with each repetition.

3. Method according to claim 1 or 2, **characterized in that**

to determine or change the increment correction value, a or the filter function is used, and
at each repetition of steps a) and b) for each increment
a current difference time is determined,
as the filter input variable the current differential time or a quantity proportional to the current differential time is entered into the filter function, and
a resulting output of the Fifunction is used as the respective increment correction value, or at least is used to determine the increment correction value.

4. Method according to any of the preceding claims, **characterized in that**

for each repetition of steps a) and b) for each increment,
a current difference time is determined, and
the increment correction value IK(k+1) can be determined essentially or exactly using the following formula,

$$IK(k+1)=1K(k) - (IK(k)-F(n)*M)*G(k),$$

whereby

IK(k) denotes a previous increment correction value with which
k as a sequential number for counting the repetitions,
t denotes the current difference time,
n denotes the current rotor speed,
F(n) denotes an adjustment factor dependent on the rotor speed and
G(k) denotes a time-dependent weighting factor
preferably
the adjustment factor F(n) is defined as
F(n) =n0/n with n0 as reference speed, and/or
G(k) has values in the range of 0 to 1, in particular values in the range of 0.001 to 0.2, and/or
G(k) decreases with increasing repetitions and thus with time.

5. Method according to any of the preceding claims, **characterized in that**

a filter function for determining or tracking each increment correction value has at least one filter time constant, and that
the filter time constant is changed with increasing time after the process has been started, in particular that
the filter time constant increases with increasing time and/or increasing repetition of steps a) and b).

6. Method according to any of the preceding claims, **characterized in that**

a filter time constant is changed to determine or update each increment correction value as a function of an operating state, in particular
depending on the recorded rotor speed, in particular
the lower the rotor speed, the greater the filter time constant.

7. Method according to any of the preceding claims, **characterized in that**
the procedure, in particular steps a) and b) and the repetition of steps a) and b) with repeated determination of the increment correction values, is carried out during the operation of the wind turbine.

8. Method according to any of the preceding claims, **characterized in that**

each increment correction value is assigned to a reference speed, and
provides for a conversion rule, in particular a proportionality factor, to use the increment correction value of the reference speed to correct an increment time at a speed other than the reference speed.

9. Method according to any of the preceding claims, **characterized in that**

the increment correction values are stored in a correction table, and/or
for each increment, several increment correction values are stored in particular for different types of values of the rotor speed.

10. Method according to any of the preceding claims, **characterized in that**
the increment correction values of all increments, at least for one reference speed, are changed by a compensation value that is the same for all increment correction values, in particular in such a way that:

the compensation value is added to each increment correction value, and in addition, or alternatively,
the compensation value is chosen in such a way that the sum of all increment correction values changed by the compensation value becomes zero.

11. Method according to any of the preceding claims, **characterized in that**

the increment correction values are stored in a dynamic table that can be updated on the fly, in particular in such a way that:

the increment correction values of the table are updated by means of a filter function according to the current difference time or a proportional magnitude and in addition, or alternatively,
the table is changed by one or the compensation value for each increment correction value, at least for one reference speed, and

the corrected speed is determined in such a way that
for each increment of the currently measured increment time and the corresponding increment correction value from the dynamic table, a corrected incremental time is determined, and from this the corrected speed is determined and used as the current speed of the wind turbine.

12. Method for controlling a wind turbine (100), wherein

the wind turbine is controlled as a function of a rotor speed, and
the rotor speed is measured by a method according to one of the above claims.

13. Wind turbine (100), in particular a gearless wind turbine, prepared to carry out a method for detecting a rotor speed of the wind turbine, and the wind turbine includes

an aerodynamic rotor (106) that can be operated at a variable rotor speed,
a speed measuring device (32) for measuring the rotor speed, with
an increment carrier (18) with increments distributed over a circumference, wherein the increment carrier is mechanically coupled to the rotor (106) in such a way that one revolution of the increment carrier (18) corresponds to one revolution of the rotor
and
a measurement sensor (28) for detecting the rotational speed of the increment carrier (18), wherein the measurement sensor records times as increment times for each increment in which the increment carrier rotates by one increment at a time, and
a control device (103) for controlling the wind turbine (100) and for carrying out the procedure for detecting a rotor speed,
whereas, for a corrected measurement in the method for detecting a rotor speed, the following steps are provided for when the rotor is rotated (106):

a) for each increment, determine a difference time as the difference of a currently measured incremental time and a mean time, where

the mean time is an arithmetic mean over all increment times recorded in one or more complete revolutions of the increment carrier for each increment, and

b) determining one increment correction at a timevalue for each increment as a function of the difference time of the increment in question formed in step (a), and

for the determination of a corrected rotor speed in the method for detecting a rotor speed

a corrected increment time is determined for each increment by correcting the current increment time as a function of the increment correction value, and

a corrected rotor speed is determined as the current rotor speed from the corrected increment time.

**14.** Wind turbine (100) according to claim 13, **characterized in that**

the winch turbine (100), in particular the control device (103), is prepared to carry out a method according to one of claims 1 to 12.

**Revendications**

**1.** Procédé de détection d'une vitesse de rotation de rotor d'une éolienne (100), et l'éolienne comprenant

- un rotor aérodynamique (106), qui peut fonctionner avec une vitesse de rotation de rotor variable, et
- un dispositif de mesure de vitesse de rotation destiné à détecter la vitesse de rotation de rotor, avec

- - un support à incrément (18) avec des incréments répartis sur une périphérie, dans lequel le support à incrément (18) est couplé mécaniquement au rotor (106) de telle sorte qu'une rotation complète du support à incrément (18) correspond à une rotation complète du rotor (106), et
- - un capteur de mesure (28) destiné à détecter une vitesse de rotation du support à incrément (18), dans lequel le capteur de mesure détecte des temps en tant que temps d'incrément pour chaque incrément, dans lesquels le support à incrément continue à tourner respectivement autour d'un incrément,

dans lequel sont prévues, lors de la rotation du rotor (106), pour une mesure corrigée, des étapes suivantes :

a) pour chaque incrément, de détermination de respectivement un temps de différence en tant que différence d'un temps d'incrément mesuré de manière instantanée et d'un temps moyen, dans lequel le temps moyen est une valeur moyenne arithmétique de tous les temps d'incrément relevés lors d'une ou de plusieurs rotations complètes totales du support à incrément pour chaque incrément, et

b) de détermination de respectivement une valeur de correction d'incrément pour chaque incrément respectivement en fonction du temps de différence, obtenu à l'étape a), de l'incrément concerné, et dans lequel

pour définir une vitesse de rotation de rotor corrigée

- un temps d'incrément corrigé est défini pour respectivement un incrément en corrigeant le temps d'incrément respectivement instantané en fonction de la valeur de correction d'incrément, et
- une vitesse de rotation de rotor corrigée est définie en tant que vitesse de rotation de rotor instantanée à partir du temps d'incrément corrigé.

**2.** Procédé selon la revendication 1, **caractérisé en ce que**

- les étapes a) et b) sont répétées pour une ou plusieurs autres rotations complètes, et
- à chaque répétition pour chaque incrément

- - un temps de différence instantané est respectivement défini, et
- - la valeur de correction d'incrément est modifiée en fonction du temps de différence instantané, en particulier de telle sorte que
- - pour définir la valeur de correction d'incrément, le temps de différence instantané passe par une fonction de filtrage, et/ou de telle sorte que
- - la valeur de correction d'incrément se rapproche avec chaque répétition d'une valeur finale.

3. Procédé selon la revendication 1 ou 2, **caractérisé en ce que**

   - pour définir ou modifier la valeur de correction d'incrément, une ou la fonction de filtrage est utilisée, et
   - à chaque répétition des étapes a) et b) pour chaque incrément

      - - respectivement un temps de différence instantané est défini,
      - - le temps de différence instantané ou une grandeur proportionnelle au temps de différence instantané est entré ou entrée dans la fonction de filtrage en tant que grandeur d'entrée de filtrage, et
      - - une grandeur de sortie en résultant de la fonction de filtrage est utilisée en tant que valeur de correction d'incrément respective, ou est utilisée au moins pour définir la valeur de correction d'incrément.

4. Procédé selon l'une quelconque des revendications précédentes, **caractérisé en ce que**

   - à chaque répétition des étapes a) et b) pour chaque incrément, respectivement
   - un temps de différence instantané est défini et
   - la valeur de correction d'incrément IK(k+1) peut être définie sensiblement ou exactement à l'aide de la formule suivante

$$IK(k+1) = IK(k) - (IK(k) - F(n) * \Delta t) * G(k),$$

   dans lequel

      $IK(k)$ désigne une valeur de correction d'incrément précédente, avec
      $k$ en tant que nombre séquentiel pour compter les répétitions,
      $\Delta t$ désigne le temps de différence instantané,
      $n$ désigne la vitesse de rotation de rotor instantanée,
      $F(n)$ désigne un facteur d'adaptation dépendant de la vitesse de rotation de rotor, et
      $G(k)$ un facteur de pondération dépendant du temps,

   - dans lequel de préférence
   le facteur d'adaptation $F(n)$ est défini en tant que $F(n) = n0/n$ avec $n0$ en tant que vitesse de rotation de référence, et/ou
   $G(k)$ présente des valeurs dans la plage de 0 à 1, en particulier une valeur dans la plage de 0,001 à 0,2, et/ou
   $G(k)$ diminue au fur et à mesure que les répétitions augmentent et ainsi avec le temps.

5. Procédé selon l'une quelconque des revendications précédentes, **caractérisé en ce que**

   - une ou la fonction de filtrage présente, pour définir ou suivre chaque valeur de correction d'incrément, au moins une constante de temps de filtrage, et que
   - la constante de temps de filtrage est modifiée après un démarrage du procédé avec un temps qui augmente, en particulier que
   - la constante de temps de filtrage est augmentée au fur et à mesure que le temps augmente et/ou que la répétition des étapes a) et b) augmente.

6. Procédé selon l'une quelconque des revendications précédentes, **caractérisé en ce que**

   - une ou la constante de temps de filtrage est modifiée pour définir ou suivre chaque valeur de correction d'incrément en fonction d'un état de fonctionnement, en particulier,
   - en fonction de la vitesse de rotation de rotor détectée, dans lequel en particulier
   - plus la constante de temps de filtrage choisie est importante, plus la vitesse de rotation de rotor est petite.

7. Procédé selon l'une quelconque des revendications précédentes, **caractérisé en ce que**

   - le procédé, en particulier les étapes a) et b), et la répétition des étapes a) et b), est mis en œuvre avec la définition se répétant des valeurs de correction d'incrément lors du fonctionnement de l'éolienne.

8. Procédé selon l'une quelconque des revendications précédentes, **caractérisé en ce que**

- chaque valeur de correction d'incrément est associée à une vitesse de rotation de référence, et
- une règle de conversion, en particulier un facteur de proportionnalité, est prévue pour utiliser la valeur de correction d'incrément de la vitesse de rotation de référence pour corriger un temps d'incrément pour une vitesse de rotation autre que la vitesse de rotation de référence.

9. Procédé selon l'une quelconque des revendications précédentes, **caractérisé en ce que**

- les valeurs de correction d'incrément sont enregistrées dans un tableau de correction, et/ou
- pour chaque incrément, respectivement plusieurs valeurs de correction d'incrément sont sauvegardées, en particulier pour différentes valeurs de la vitesse de rotation de rotor.

10. Procédé selon l'une quelconque des revendications précédentes, **caractérisé en ce que**

- les valeurs de correction d'incrément de tous les incréments sont modifiées, au moins pour une vitesse de rotation de référence, d'une valeur de compensation identique à toutes les valeurs de correction d'incrément, en particulier de telle sorte que
- la valeur de compensation est additionnée en chaque valeur de correction d'incrément et par ailleurs ou en variante
- la valeur de compensation est choisie de telle sorte que la somme de toutes les valeurs de correction d'incrément modifiées de la valeur de compensation est nulle.

11. Procédé selon l'une quelconque des revendications précédentes, **caractérisé en ce que**

- les valeurs de correction d'incrément sont enregistrées dans un tableau dynamique, qui peut être mis à jour lors du fonctionnement en cours, en particulier de telle sorte que

- - les valeurs de correction d'incrément du tableau sont suivies respectivement par l'intermédiaire d'une fonction de filtrage du temps de différence instantané ou d'une grandeur proportionnelle à celui-ci, et par ailleurs ou en variante,
- - le tableau est modifié d'une ou de la valeur de compensation pour chaque valeur de correction d'incrément, au moins d'une vitesse de rotation de référence, et

- la vitesse de rotation corrigée est définie de telle sorte que

- - un temps d'incrément corrigé est défini par incrément à chaque incrément à partir du temps d'incrément mesuré instantanément et de la valeur de correction d'incrément associée provenant du tableau dynamique, et la vitesse de rotation corrigée est définie sur cette base et est utilisée en tant que vitesse de rotation instantanée de l'éolienne.

12. Procédé pour commander une éolienne (100), dans lequel

- l'éolienne est commandée en fonction d'une vitesse de rotation de rotor, et
- la vitesse de rotation de rotor est détectée avec un procédé selon l'une quelconque des revendications précédentes.

13. Eolienne (100), en particulier éolienne sans transmission, préparée pour exécuter

un procédé destiné à détecter une vitesse de rotation de rotor de l'éolienne, et l'éolienne comprenant

- un rotor aérodynamique (106), qui peut fonctionner avec une vitesse de rotation de rotor variable,
- un dispositif de mesure de vitesse de rotation (32) destiné à détecter la vitesse de rotation de rotor, avec

- - un support à incrément (18) avec des incréments répartis sur une périphérie, dans lequel le support à incrément est couplé mécaniquement au rotor (106) de telle sorte qu'une rotation complète du support à incrément (18) correspond à une rotation complète du rotor
et
- - un capteur de mesure (28) destiné à détecter une vitesse de rotation du support à incrément (18), dans lequel le capteur de mesure détecte des temps en tant que temps d'incrément pour chaque incrément, dans lesquels le support à incrément continue à tourner respectivement d'un incrément, et

- un système de commande (103) destiné à commander l'éolienne (100) et destiné à exécuter le procédé pour détecter une vitesse de rotation de rotor,

dans lequel sont prévues, pour une mesure corrigée dans le procédé destiné à détecter une vitesse de rotation de rotor, lors de la rotation du rotor (106), des étapes suivantes :

a) pour chaque incrément, de détermination de respectivement un temps de différence en tant que différence d'un temps d'incrément mesuré de manière instantanée et d'un temps moyen, dans lequel
le temps moyen est une valeur moyenne arithmétique de tous les temps d'incrément relevés lors d'une ou de plusieurs complètes totales du support à incrément pour chaque incrément, et
b) de détermination de respectivement une valeur de correction d'incrément pour chaque incrément respectivement en fonction du temps de différence, obtenu à l'étape a), de l'incrément concerné, et dans lequel

pour définir une vitesse de rotation de rotor corrigée dans le procédé destiné à détecter une vitesse de rotation de rotor

- un temps d'incrément corrigé est défini pour respectivement un incrément en corrigeant le temps d'incrément respectivement instantané en fonction de la valeur de correction d'incrément, et
- une vitesse de rotation de rotor corrigée est définie en tant que vitesse de rotation de rotor instantanée à partir du temps d'incrément corrigé.

14. Eolienne (100) selon la revendication 13, **caractérisée en ce que**

- l'éolienne (100), en particulier le système de commande (103), est préparée pour exécuter un procédé selon l'une quelconque des revendications 1 à 12.

Fig. 1

Fig. 2

Fig. 3A

Fig. 3B

$$t_M = \frac{1}{N} \cdot \sum_{i=1}^{N} t_i$$

Bsp. : N =10

Fig. 4

502

J=1, k=0
START

514

504

$t_{Mj}$

506

508

$\Delta t_{ij} = t_{ij} - t_{Mj}$

510

$K0_i = \Delta t_{ij} \cdot \dfrac{nj}{n0}$

512

K=0
$IK_i(1) = K0_i$

516

K>0
$IK_i(k+1) = IK_i(k) - (IK_i(k) - K0_i) \cdot G(k)$

$IK_i \longrightarrow Tab$

518

i=1...N

Rot

520

500

j=j+1; k=k+1

Fig. 5

27

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007026995 B4

- US 2014020444 A1